# EUROPEAN PATENT APPLICATION

(11) **EP 4 615 127 A1**
(43) Date of publication of application: **10.09.2025**
(21) Application number: 23886278.3
(22) Date of filing: 01.11.2023
(51) Int. Cl.: H04W 72/25, H04W 74/08, H04W 24/08, H04W 92/18, H04W 72/04, H04L 27/26, H04W 16/14, H04W 72/20

(54) **METHOD AND APPARATUS FOR PERFORMING SIDELINK COMMUNICATION IN UNLICENSED BAND**

(30) Priority: 01.11.2022 KR 20220143567; 01.11.2022 KR 20220143699; 07.11.2022 US 202263423070 P; 30.12.2022 KR 20220190947; 16.02.2023 KR 20230020876
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Plasseraud IP
(86) International application number: PCT/KR2023/017287
(87) International publication number: WO 2024/096582

(57) **Abstract**

Provided are a method performed by a first device in a wireless communication system, and an apparatus supporting same. The method may comprise the steps of: acquiring configuration information related to a resource pool; acquiring configuration information related to sidelink (SL) listen before talk (LBT) failure recovery, which includes information related to the maximum number of SL LBT failures; performing SL LBT before SL transmission in a plurality of slots within the resource pool; on the basis that the SL LBT fails, increasing an SL LBT counter by 1; and triggering a consistent SL LBT failure on the basis that the SL LBT counter reaches the maximum number of SL LBT failures.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

According to an embodiment, a method performed by a first device may be provided. The method may include: obtaining configuration information related to a resource pool; obtaining configuration information related to sidelink (SL) listen before talk (LBT) failure recovery including information related to a maximum number of SL LBT failures; performing an SL LBT before an SL transmission in multiple slots in the resource pool; incrementing an SL LBT counter by 1 based on that the SL LBT fails; and triggering consistent SL LBT failure based on that the SL LBT counter reaches the maximum number of SL LBT failures.

According to an embodiment, a first device configured to perform wireless communication may be provided. The first device may include: at least one transceiver; at least one processor; and at least one memory connected to the at least one processor and storing instructions, and, the instructions, based on being executed by the at least one processor, cause the first device to perform operations comprising: obtaining configuration information related to a resource pool; obtaining configuration information related to sidelink (SL) listen before talk (LBT) failure recovery including information related to a maximum number of SL LBT failures; performing an SL LBT before an SL transmission in multiple slots in the resource pool; incrementing an SL LBT counter by 1 based on that the SL LBT fails; and triggering consistent SL LBT failure based on that the SL LBT counter reaches the maximum number of SL LBT failures.

According to an embodiment, a processing device configured to control a first device may be provided. The processing may include: at least one processor; and at least one memory connected to the at least one processor and storing instructions, and, the instructions, based on being executed by the at least one processor, cause the first device to perform operations comprising: obtaining configuration information related to a resource pool; obtaining configuration information related to sidelink (SL) listen before talk (LBT) failure recovery including information related to a maximum number of SL LBT failures; performing an SL LBT before an SL transmission in multiple slots in the resource pool; incrementing an SL LBT counter by 1 based on that the SL LBT fails; and triggering consistent SL LBT failure based on that the SL LBT counter reaches the maximum number of SL LBT failures.

According to an embodiment, a non-transitory computer-readable storage medium storing instructions may be provided. The instructions, based on being executed, cause a first device to perform operations comprising: obtaining configuration information related to a resource pool; obtaining configuration information related to sidelink (SL) listen before talk (LBT) failure recovery including information related to a maximum number of SL LBT failures; performing an SL LBT before an SL transmission in multiple slots in the resource pool; incrementing an SL LBT counter by 1 based on that the SL LBT fails; and triggering consistent SL LBT failure based on that the SL LBT counter reaches the maximum number of SL LBT failures.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows an interlaced RB, based on an embodiment of the present disclosure.
FIG. 11 shows an example of a wireless communication system supporting an unlicensed band, based on an embodiment of the present disclosure.
FIG. 12 shows a method of occupying resources in an unlicensed band, based on an embodiment of the present disclosure.
FIG. 13 shows a case in which a plurality of LBT-SBs are included in an unlicensed band, based on an embodiment of the present disclosure.
FIG. 14 shows CAP operations performed by a base station to transmit a downlink signal through an unlicensed band, based on an embodiment of the present disclosure.
FIG. 15 shows type 1 CAP operations performed by a UE to transmit an uplink signal, based on an embodiment of the present disclosure.
FIG. 16 shows a channel access procedure, based on an embodiment of the present disclosure.
FIG. 17 shows a time related to LBT, based on an embodiment of the present disclosure.
FIG. 18 shows an embodiment related to transmission operation of UE in Shared COT based on an embodiment of the present disclosure.
FIG. 19 shows an example of not transmitting an SL LBT failure indication in multiple slots, based on an embodiment of the present disclosure.
FIG. 20 shows an example of transmitting an SL LBT failure indication in multiple slots, based on an embodiment of the present disclosure.
FIG. 21 shows an SL LBT failure detection and recovery procedure, based on an embodiment of the present disclosure.
FIG. 22 shows a method for performing wireless communication by a first device, based on an embodiment of the present disclosure.
FIG. 23 shows a method for performing wireless communication by a second device, based on an embodiment of the present disclosure.
FIG. 24 shows a communication system 1, based on an embodiment of the present disclosure.
FIG. 25 shows wireless devices, based on an embodiment of the present disclosure.
FIG. 26 shows a signal process circuit for a transmission signal, based on an embodiment of the present disclosure.
FIG. 27 shows another example of a wireless device, based on an embodiment of the present disclosure.
FIG. 28 shows a hand-held device, based on an embodiment of the present disclosure.
FIG. 29 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile internet, high throughput, high network capacity, high energy efficiency, low backhaul and access network congestion, and enhanced data security.

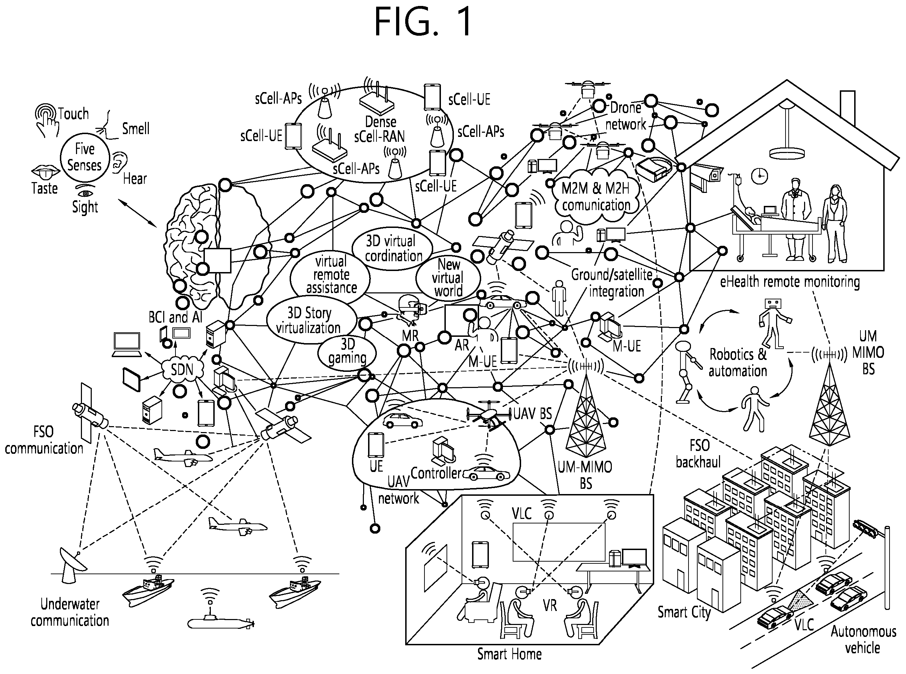

FIG. 1 shows a communication structure providable in a 6G system, based on an embodiment of the present disclosure. The embodiment of FIG. 1 may be combined with various embodiments of the present disclosure.

The 6G system will have 50 times higher simultaneous wireless communication connectivity than a 5G wireless communication system. URLLC, which is the key feature of 5G, will become more important technology by providing end-to-end latency less than 1 ms in 6G communication. The 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5 GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5 GB network in order to ensure flexibility, reconfigurability and programmability.

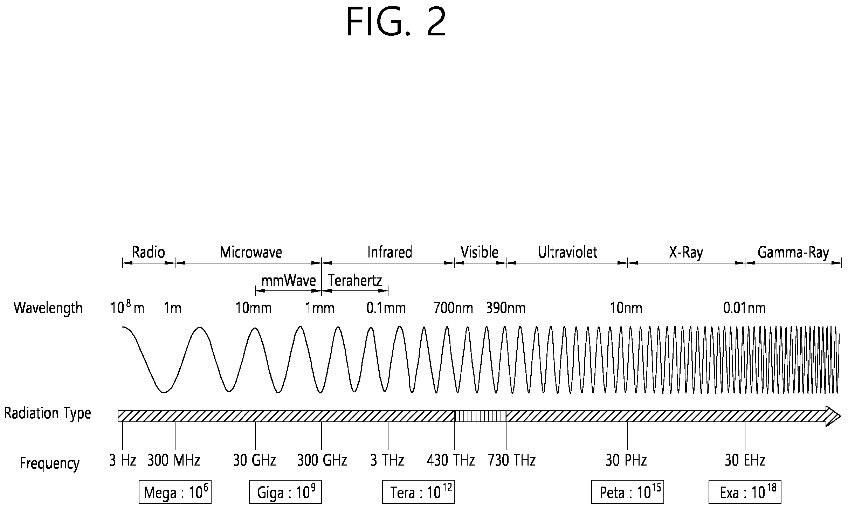

Core implementation technology of 6G system is described below.
- Artificial Intelligence (AI): Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical backhaul network (FSO Backhaul Network)
- Non-terrestrial networks (NTN)
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Autonomous driving (self-driving): For perfect autonomous driving, it is necessary to notify dangerous situation of each other through communication between vehicle and vehicle, to check information like parking information location and signal change time through communication between vehicle and infrastructure such as parking lots and/or traffic lights. Vehicle to everything (V2X) that is a core element for establishing an autonomous driving infrastructure is a technology that vehicle communicates and shares with various elements in road for autonomous driving such as vehicle to vehicle (V2V), vehicle to infrastructure (V2I). To maximize a performance of autonomous driving and to secure high safety, high transmission speed and low latency technology have to be needed. Furthermore, to directly control vehicle in dangerous situation and to actively intervene vehicle driving beyond a level of a warning or a guidance message to driver, as the amount of the information to transmit and receive is larger, autonomous driving is expected to be maximized in 6G being higher transmission speed and lower latency than 5G.

For clarity in the description, 5G NR is mainly described, but the technical idea according to an embodiment of the present disclosure is not limited thereto. Various embodiments of the present disclosure can also be applied to 6G communication systems.

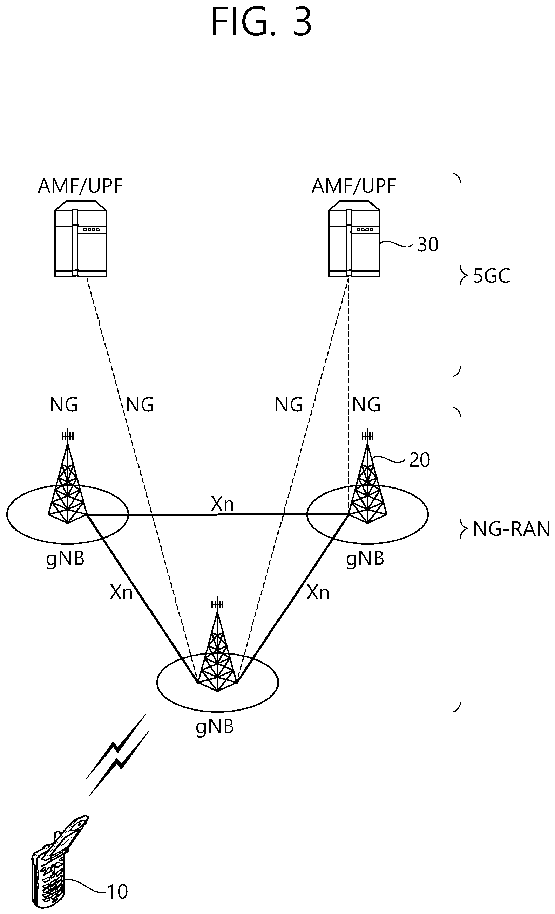

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

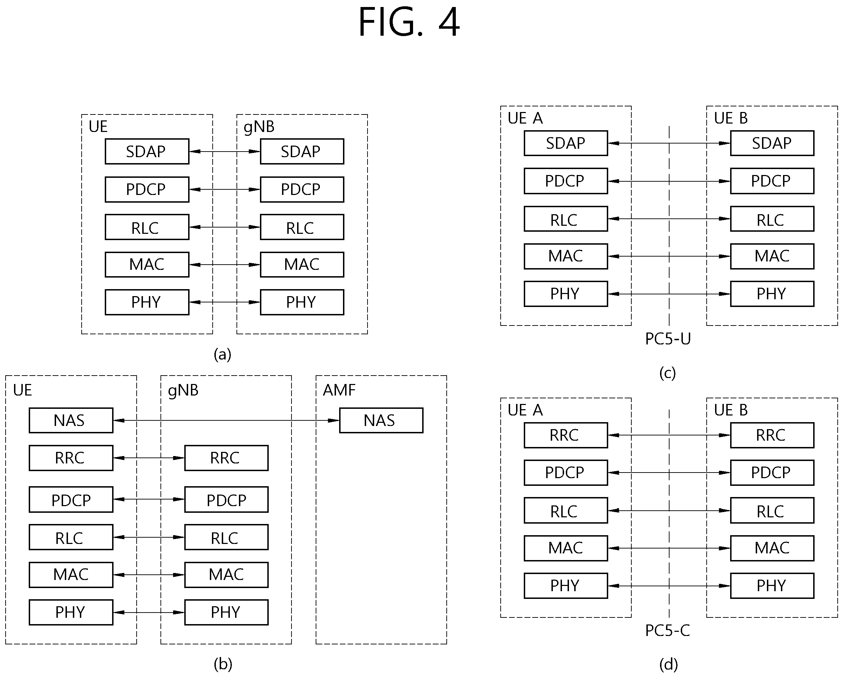

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC _INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

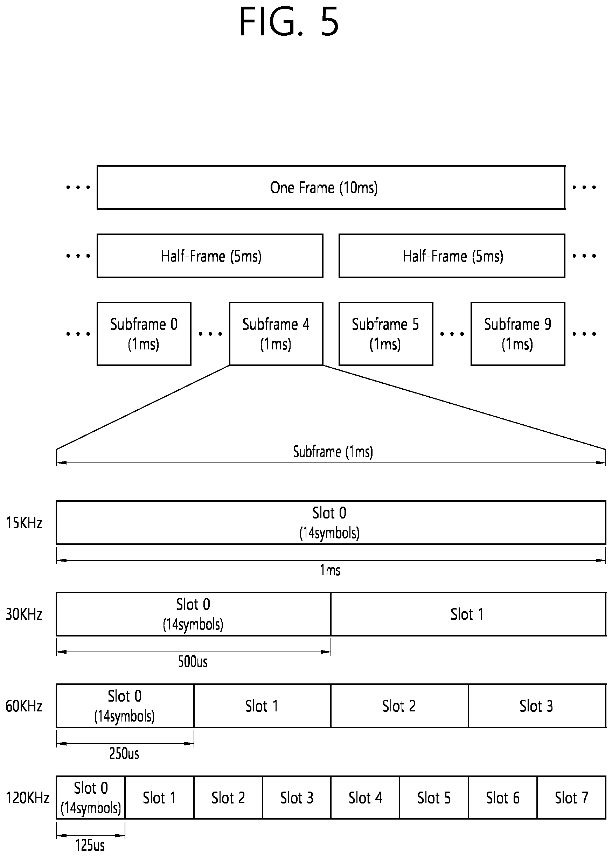

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT- s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{syrnb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

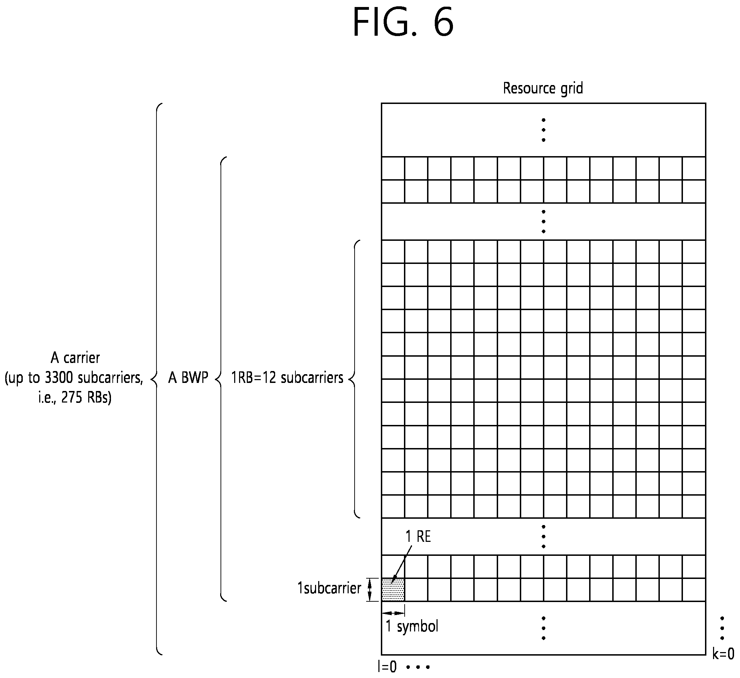

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

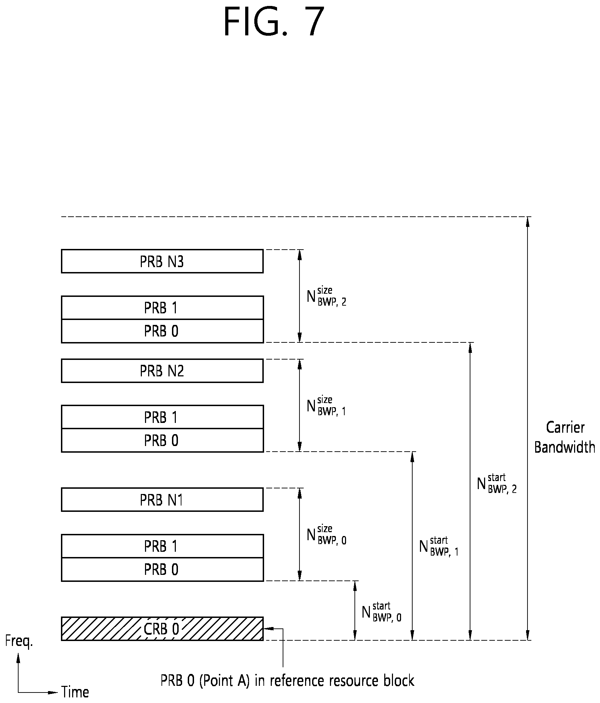

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

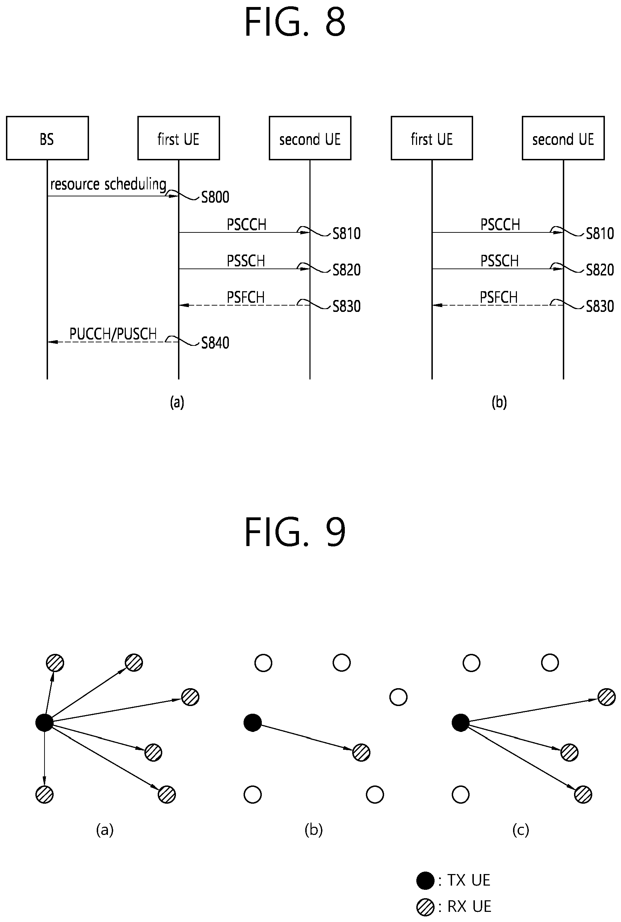

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCHresource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1 ^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.
(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

Meanwhile, a set of (equally spaced) non-contiguous RBs on a frequency may be allocated to a UE. This set of non-contiguous RBs may be referred to as interlaced RBs. This may be useful in spectrum (e.g., shared spectrum) that is subject to regulations such as occupied channel bandwidth (OCB), power spectral density (PSD), etc.

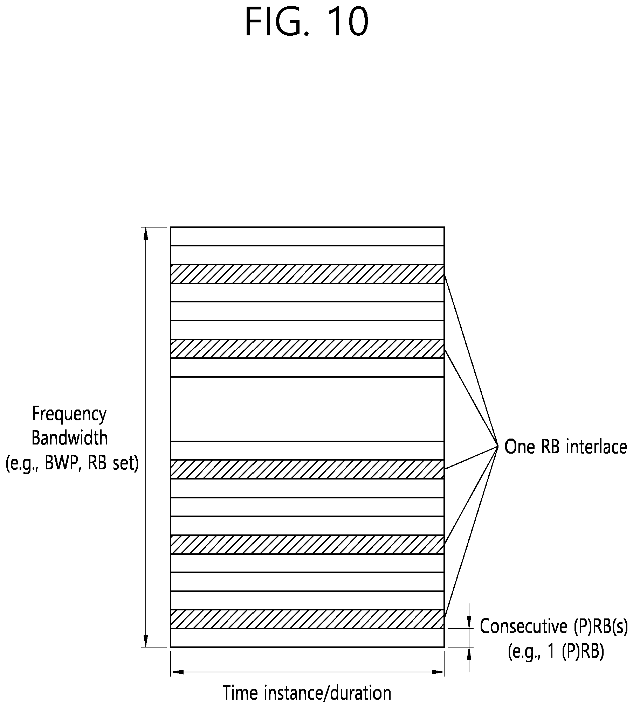

FIG. 10 shows an interlaced RB, based on an embodiment of the present disclosure. The embodiment of FIG. 10 may be combined with various embodiments of the present disclosure.

Referring to FIG. 10, interlaces of RBs may be defined in a frequency domain. An interlace m∈{0, 1, ..., M-1} may comprise (common) RBs {m, M+m, 2M+m, 3M+m, ...}, where M may represent the number of interlaced RBs given by Table 8.

**[Table 8]**

| u | M |
|---|---|
| 0 | 10 |
| 1 | 5 |

A communication device (e.g., a device, a UE, a vehicle, a drone, etc. proposed in various embodiments of the present disclosure) may transmit a signal/channel by using one or more interlaced RBs.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

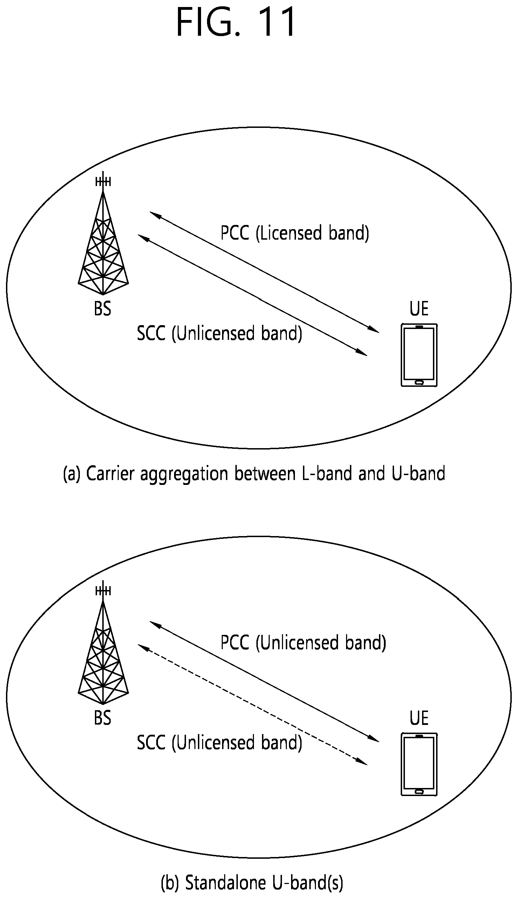

FIG. 11 shows an example of a wireless communication system supporting an unlicensed band, based on an embodiment of the present disclosure. For example, FIG. 11 may include an unlicensed spectrum (NR-U) wireless communication system. The embodiment of FIG. 11 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 11, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 11. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 11, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tₛₗ = 9 us. The base station or the UE senses a channel during a sensing slot duration. If power detected for at least 4 us within the sensing slot duration is less than an energy detection threshold Xₜₕᵣₑₛₕ, the sensing slot duration Tₛₗ is considered to be idle. Otherwise, the sensing slot duration Tₛₗ = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

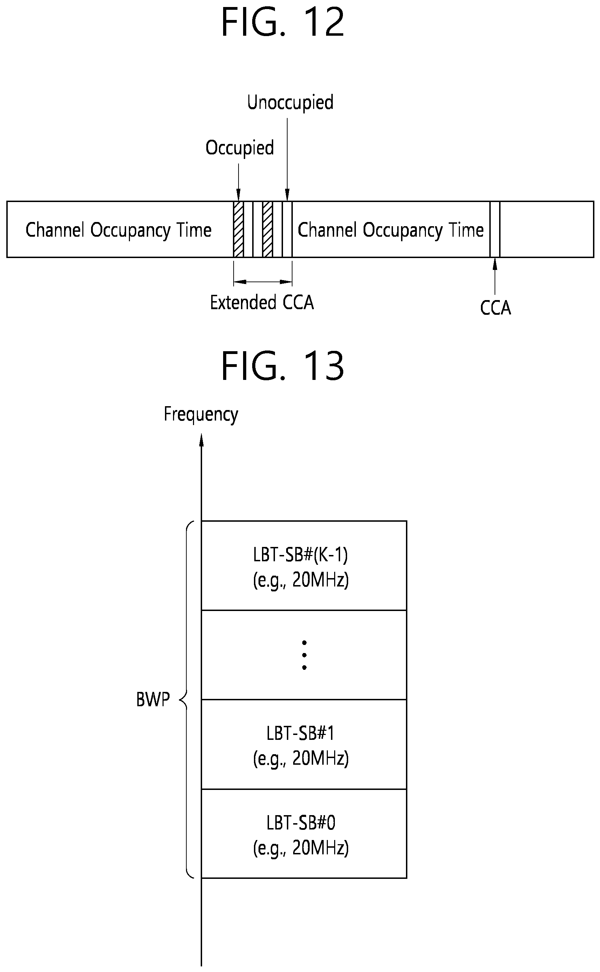

FIG. 12 shows a method of occupying resources in an unlicensed band, based on an embodiment of the present disclosure. The embodiment of FIG. 12 may be combined with various embodiments of the present disclosure.

Referring to FIG. 12, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is said that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 9 shows an example of the channel access procedure (CAP) supported in NR-U.

**[Table 9]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP - Type 2A, 2B, 2C | CAP without random back-off |
| | | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP - Type 2A, 2B, 2C | CAP without random back-off |
| | | - time duration spanned by sensing slots that are sensed to be idle before an uplink or sidelink transmission(s) is deterministic |

Referring to Table 9, the LBT type or CAP for DL/UL/SL transmission may be defined. However, Table 9 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 13 shows a case in which a plurality of LBT-SBs are included in an unlicensed band, based on an embodiment of the present disclosure. The embodiment of FIG. 13 may be combined with various embodiments of the present disclosure.

Referring to FIG. 13, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 10 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 10]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

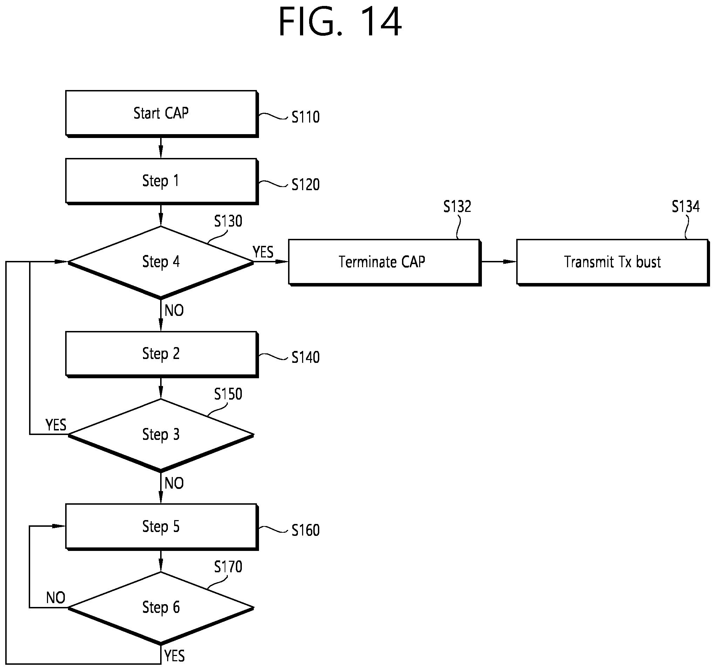

FIG. 14 shows CAP operations performed by a base station to transmit a downlink signal through an unlicensed band, based on an embodiment of the present disclosure. The embodiment of FIG. 14 may be combined with various embodiments of the present disclosure.

Referring to FIG. 14, the base station may sense whether a channel is idle for sensing slot durations of a defer duration T_{d}. Then, if a counter N is zero, the base station may perform transmission (S134). In this case, the base station may adjust the counter N by sensing the channel for additional sensing slot duration(s) according to the following steps:
Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration T_{d} or all the slots of the additional defer duration T_{d} are detected to be idle.
Step 6) (S170) If the channel is sensed to be idle for all the slot durations of the additional defer duration T_{d} (Y), step 4 proceeds. Otherwise (N), step 5 proceeds.

Table 11 shows that mₚ, a minimum contention window (CW), a maximum CW, a maximum channel occupancy time (MCOT), and an allowed CW size, which are applied to the CAP, vary depending on channel access priority classes.

**[Table 11]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 11, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f} (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for T_{f} = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

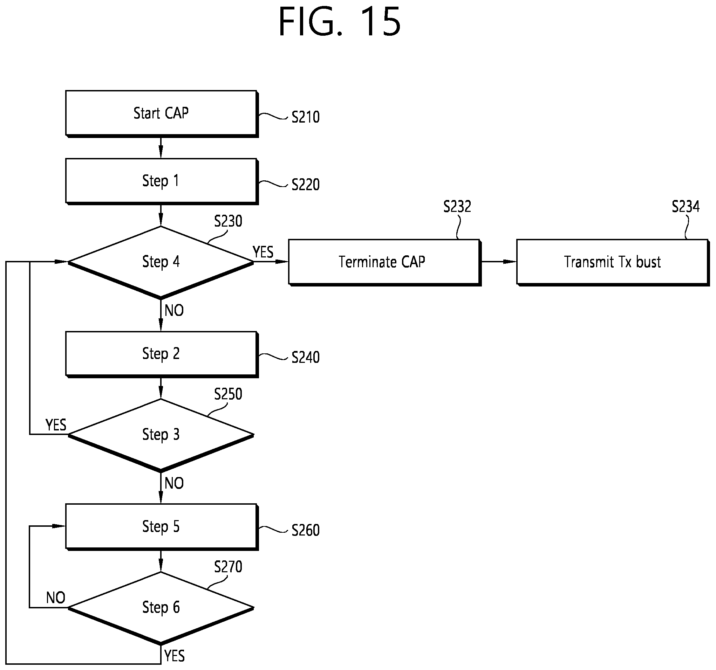

FIG. 15 shows type 1 CAP operations performed by a UE to transmit an uplink signal, based on an embodiment of the present disclosure. The embodiment of FIG. 15 may be combined with various embodiments of the present disclosure.

Referring to FIG. 15, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration T_{d} (Y), step 4 proceeds. Otherwise (N), step 5 proceeds.

Table 12 shows that mₚ, a minimum CW, a maximum CW, a maximum channel occupancy time (MCOT), and an allowed CW size, which are applied to the CAP, vary depending on channel access priority classes.

**[Table 12]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 12, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f} (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f} = 16 us. In the type 2B UL CAP, T_{f} includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, after selecting a random value between the minimum CW and the maximum CW mapped to the CAPC, the UE may select a backoff counter (BC) between zero and the random value. In this case, for example, the BC may be a positive integer less than or equal to the random value. The UE sensing a channel decreases the BC by 1 if the channel is idle. If the BC becomes zero and the UE detects that the channel is idle for the time T_{d} (T_{d} = T_{f} + mₚ * Tₛₗ), the UE may attempt to transmit data by occupying the channel. If the UE attempting to transmit data detects a collision, the UE may increase the CW size mapped to the CAPC, and the UE may reselect a BC between zero and the increased CW. The UE that successfully transmits a packet may initialize the CW size (to the CW min).

For example, Tₛₗ (= 9 usec) is a basic sensing unit or sensing slots, and may include a measurement duration for at least 4 usec. For example, the front 9 usec of T_{f} (= 16 usec) may be configured to be Tₛₗ. For example, mₚ may be a constant mapped per CAPC and used in T_{d} calculation. For example, a smaller value may be mapped to a lower CACP value (higher priority).

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 20 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

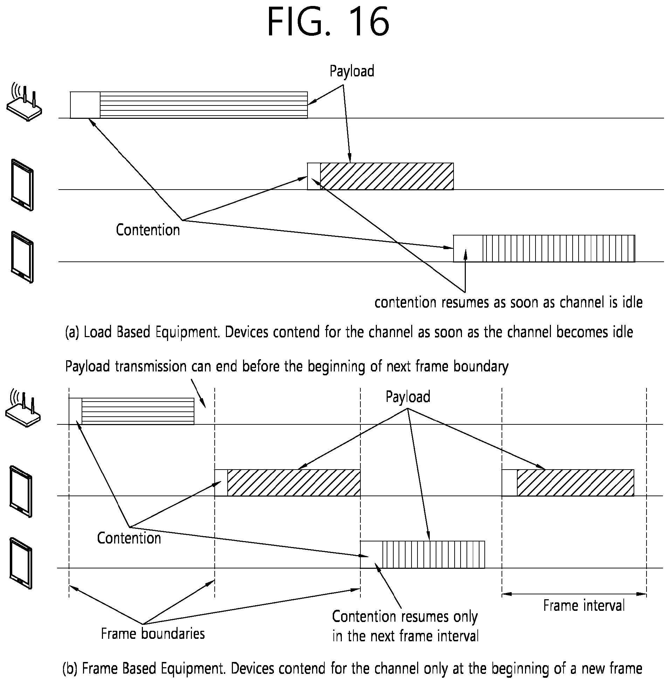

FIG. 16 shows a channel access procedure, based on an embodiment of the present disclosure. Specifically, (a) of FIG. 16 shows an example of a dynamic channel access procedure (load based equipment, LBE), and (b) of FIG. 16 shows an example of a semi-static channel access procedure (frame based equipment, FBE). The embodiment of FIG. 16 may be combined with various embodiments of the present disclosure.

Referring to (a) of FIG. 16, if a channel is idle, the UE may perform contention with other UEs on an unlicensed band to immediately occupy the channel. In addition, if the UE occupies the channel, the UE may transmit data.

Referring to (b) of FIG. 16, the UE may perform contention with other UEs on an unlicensed band at the last time within a synchronized frame boundary (or a fixed frame period (FFP)) (e.g., certain time before the start of the next FFP (or starting time)). In addition, if the UE occupies a channel within a fixed frame period (FFP), the UE may transmit data. The data transmission should complete before the next FFP begins. The UE may perform type 2 series LBT operation within the FFP. For example, within the FFP, the UE may not perform random backoff-based LBT, and the UE may sense a channel for a short period of time and perform data transmission if the channel is idle.

In SL-U, a UE may first need to occupy a channel in a sidelink unlicensed band to transmit SL data. In order to occupy a channel in a sidelink unlicensed band, a UE may perform LBT (e.g., Type 1 LBT: random backoff-based LBT) to find a channel of an unlicensed band that is not occupied by UE. If a UE performing LBT finds a channel that is not occupied by other UEs, it may occupy the channel and may perform SL transmission (e.g., SL data transmission). If an LBT process fails, a UE may re-perform LBT by adjusting parameter values for performing LBT (e.g., adjusting a contention window size, etc.) and continue a process of finding a channel in an unlicensed band that is not occupied by a UE.

For example, a transmitting UE performing sidelink communication in a sidelink unlicensed band (SL-U) may perform LBT operation to occupy a channel in an unlicensed band. For example, if LBT is successful, a UE may transmit packets on an occupied channel. For example, if LBT fails (e.g., if a UE performs sensing during a sensing slot duration and result is that a channel is busy), sidelink transmission may not be performed because a channel in an unlicensed band cannot be occupied.

A transmitting UE may perform a logical channel prioritization procedure if sidelink data (or sidelink) is available on a logical channel, and perform a multiplexing procedure for sidelink logical channel data(s) (e.g., MAC SDU(s)) to generate MAC PDUs.

If a transmitting UE completes a MAC PDU generation operation, the transmitting UE may perform an operation to occupy a channel in a sidelink unlicensed band to transmit the generated MAC PDU. For example, a transmitting UE may perform a sidelink LBT operation to find an idle channel, occupy the channel, and transmit the generated MAC PDU (or transport block (TB)) to a peer UE through the occupied channel.

For example, according to the present disclosure, SL-Channel access priority class (SL-CAPC) applied to a sidelink UE to perform LBT in a sidelink unlicensed band may be defined as follows.
- SL-CAPC mapped per type of data traffic corresponding to SL-CAPC is defined.
- Channel monitoring time (a time to monitor or sense a channel to determine whether the channel is idle or busy, e.g., T_{d} =T_{f} + mₚ*Tₛₗ), contention window size (CWS), and maximum COT value are defined per SL-CAPC.

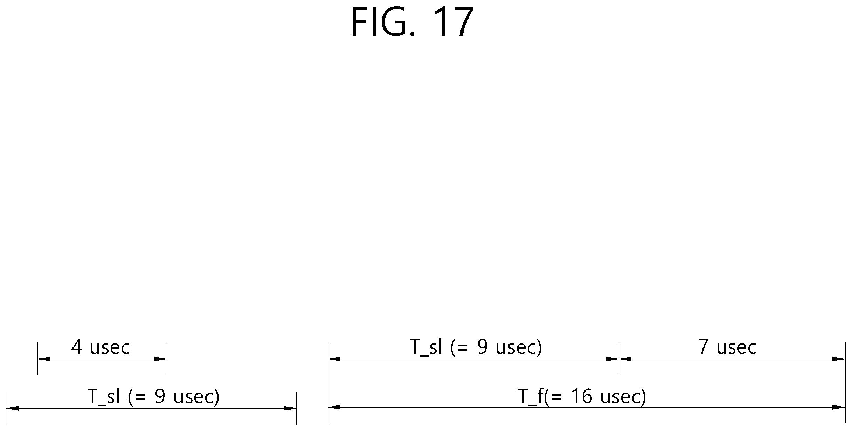

FIG. 17 shows a time related to LBT, based on an embodiment of the present disclosure. The embodiment of FIG. 17 may be combined with various embodiments of the present disclosure.

Referring to FIG. 17, Tₛₗ may be configured to 9 usec. T_{f} may be configured to 16 usec.

T_{d} = a time to monitor or sense a channel to determine whether the channel is idle or busy.

T_{f} = 16 usec, first 9 usec are consist of Tₛₗ.

mₚ = Constant used to compute Td mapped per SL CAPC (smaller value is configured for higher class SL-CAPC (e.g., SL-CAPC 1))

Tₛₗ = 9 usec, it is a basic sensing unit or sensing slot, and includes a measurement duration of at least 4 usec.
- SL-CAPC 1 (highest priority class): Channel monitoring time is configured to the shortest value. Contention window size is configured to the smallest value among SL-CAPC, it takes the least time to occupy a channel because a channel monitoring time and contention window size are the smallest. Minimum time consumption for Clear Channel Assessment (a process of determining whether a channel is busy or idle).
- SL-CAPC 2
- SL-CAPC 3
- SL-CAPC 4 (lowest priority class): Channel monitoring time is configured to the longest value. Contention window size is configured to the largest value among SL-CAPC, it takes the longest time to occupy a channel because a channel monitoring time and contention window size are the largest. Maximum time consumption for Clear Channel Assessment (a process of determining whether a channel is busy or idle).

According to the present disclosure, in a sidelink transmission burst, even if a MAC PDU is newly generated, if a CAPC value is smaller than a CAPC value of an existing MCSt, the generated MAC PDU may be transmitted by including it in the existing MCSt. By transmitting a generated MAC PDU from an existing MCSt, there is no need to perform LBT again for transmission of the generated MAC PDU, and since LBT is not performed again for transmission of the generated MAC PDU, additional battery consumption due to performing LBT for transmission of the generated MAC PDU can be prevented. The sidelink transmission burst may be MSCt.

For example, SL-CAPC may be defined to be mapped to PQI as Table 13 below. Multiple SL-CAPC values may be defined to be configured to a same PQI, and the same SL-CAPC may be mapped to different PQIs. In case of RRC CONNECTED UE, a base station may inform the UE of SL-CAPC configuration information through dedicated RRC message. In case of IDLE/INACTIVE UE, a base station may inform the UE of SL-CAPC configuration information through SIB. SL-CAPC configuration information may be pre-configured.

**[Table 13]**

| PQI Value | Resource Type | SL-CAPC | Default Priority Level | Packet Delay Budget | Packet Error Rate | Default Maximum Data Burst Volume | Default Averaging Window | Example Services |
|---|---|---|---|---|---|---|---|---|
| 21 | GBR | 1,2 | 3 | 20 ms | 10⁻⁴ | N/A | 2000 ms | Platooning between UEs - Higher degree of automation; |
| | | | | | | | | Platooning between UE and RSU - Higher degree of automation |
| 22 | (NOTE 1) | 2,3 | 4 | 50 ms | 10⁻² | N/A | 2000 ms | Sensor sharing - higher degree of automation |
| 23 | | 2,3 | 3 | 100 ms | 10⁻⁴ | N/A | 2000 ms | Information sharing for automated driving - between UEs or UE and RSU - higher degree of automation |
| 55 | Non-GBR | 1,2 | 3 | 10 ms | 10⁻⁴ | N/A | N/A | Cooperative lane change - higher degree of automation |
| 56 | | 3, 4 | 6 | 20 ms | 10⁻¹ | N/A | N/A | Platooning informative exchange - low degree of automation; |
| | | | | | | | | Platooning - information sharing with RSU |
| 57 | | 3, 4 | 5 | 25 ms | 10⁻¹ | N/A | N/A | Cooperative lane change - lower degree of automation |
| 58 | | 2,3 | 4 | 100 ms | 10⁻² | N/A | N/A | Sensor information sharing - lower degree of automation |
| 59 | | 3, 4 | 6 | 500 ms | 10⁻¹ | N/A | N/A | Platooning - reporting to an RSU |
| 90 | Delay Critical GBR | 1, 2 | 3 | 10 ms | 10⁻⁴ | 2000 bytes | 2000 ms | Cooperative collision avoidance; |
| | | | | | | | | Sensor sharing - Higher degree of automation; |
| | | | | | | | | Video sharing - higher degree of automation |
| 91 | (NOTE 1) | 1, 2 | 2 | 3 ms | 10⁻⁵ | 2000 bytes | 2000 ms | Emergency trajectory alignment; |
| | | | | | | | | Sensor sharing - Higher degree of automation |
| NOTE 1: GBR and Delay Critical GBR PQIs can only be used for unicast PC5 communications. | | | | | | | | |

It may be available for a base station to declare (through PDCCH) an SL-CAPC that a UE shall use (e.g., a SL-CAPC that a UE will use immediately) to the UE. It may be available for a base station to configure an SL-CAPC that a UE shall use and transmit it to the UE (through PDCCH). A SL-CAPC that a UE shall use may be predefined by a base station so that UEs out of coverage may use it.

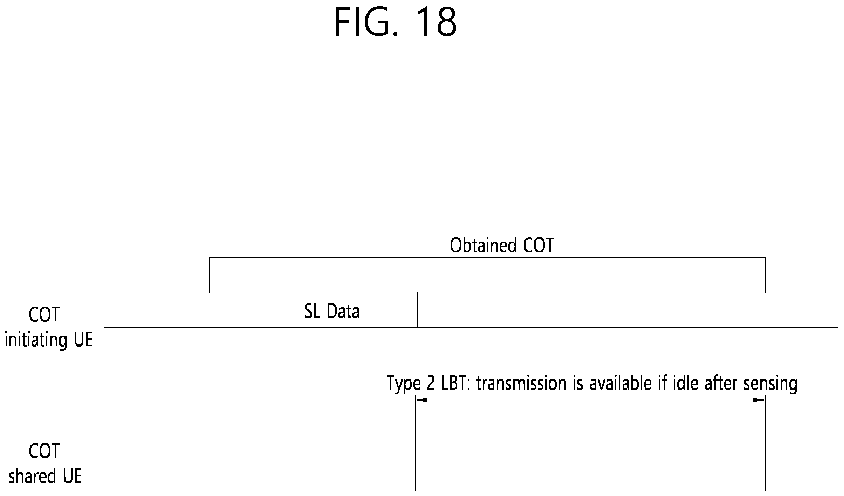

FIG. 18 shows an embodiment related to transmission operation of UE in Shared COT based on an embodiment of the present disclosure. The embodiment of FIG. 18 may be combined with various embodiments of the present disclosure.

Referring to FIG. 18, a UE that initiates a COT (e.g., COT Initiating UE) may share the COT (e.g., Shared COT) that the UE has obtained with a peer UE. A UE that has initiated/obtained a COT (e.g., Shared COT) may transfer the obtained (shared) COT to a peer UE via an SCI or MAC CE or PC5-RRC message. When transmitting a (shared) COT obtained through SCI, the obtained (shared) COT may be transmitted to a destination UE for a unicast link (e.g., a pair of L1 Source ID and L1 Destination ID), and the obtained (shared) COT may be transmitted to a groupcast/broadcast destination UE (groupcast/broadcast L1 Destination ID). When UE transmits a (shared) COT obtained through MAC CE (e.g., SL Channel Occupancy Time (COT) Information MAC CE (SL COT Information MAC CE)), the obtained (shared) COT may be transmitted to a destination UE for a unicast link (e.g., a pair of L1/L2 Source ID and L1/L2 Destination ID), and the obtained (shared) COT may be transmitted to a groupcast/broadcast destination UE (groupcast/broadcast L1/L2 Destination ID). A UE that has received a (shared) COT from a UE that initiated the (shared) COT (e.g., COT Responding UE) may perform a Type 2 LBT operation (e.g., Type 2A or Type 2B LBT: If confirmed that a channel is idle for a specific duration by performing a sensing operation, it may transmit SL data to be transmitted in a shared COT. e.g., Type 2C LBT: it may transmit SL data immediately without sensing for a specific duration) after transmission of a UE that initiated a (shared) COT is completed in a shared COT. Shared COT information that a COT initiating UE transmits to a COT responding UE may include information such as a duration of a shared COT, a start offset of the shared COT, and a SL-CAPC value to be used by the COT responding UE.

FIG. 18 shows an example of receiving a (shared) COT from a peer UE, but a UE may also receive a (shared) COT to use from a base station. A transmitting UE that will transmit sidelink data may directly initiate a COT for its own use, and may transmit sidelink data in the initiated COT by performing Type 2 LBT in the initiated COT.

For example, according to the present disclosure, the following procedure is proposed for a COT responding UE to request shared COT information from a COT initiating UE.

If a COT responding UE requests shared COT information from a COT initiating UE, after the COT responding UE generates a MAC PDU for a sidelink TB to be transmitted, the COT responding UE may request the shared COT. For example, after a COT responding UE generates a MAC PDU, a request for a shared COT may be triggered. If a COT responding UE requests shared COT information from a COT initiating UE, the COT responding may request the shared COT information through SCI or MAC CE or PC5 RRC messages. For example, if a COT responding UE requests shared COT information from a COT initiating UE, the COT responding UE may request the shared COT information by including, in SCI or MAC CE or PC5 RRC message, a representative SL-CAPC value of a MAC PDU (multiplexed with MAC CE/MAC SDUs/SCCH data) generated by an LCP result. For example, if a COT responding UE requests shared COT information from a COT initiating UE, the COT responding UE may request the shared COT information by including, in SCI or MAC CE or PC5 RRC message, a SL-CAPC value associated with each MAC CE/MAC SDUs/SCCH data multiplexed to a MAC PDU generated by an LCP result.

For example, if a COT responding UE requests shared COT information from a COT initiating UE, the UE may request shared COT information by including future resource location information that the UE receiving COT will use as a transmission resource in the SCI or MAC CE or PC5 RRC message (e.g., including an offset value for the future resource location by referring to the location of the most recent or last transmission related to the SCI/MAC CE/PC5 RRC message transmitted to request shared COT information).

For example, the following conditions are proposed as conditions under which a COT responding UE may transmit an SCI or MAC CE or PC5 RRC message requesting shared COT information. For example, if a COT responding UE has a packet or TB or PSFCH or sidelink signal or sidelink channel or SL-SSB to transmit to a COT initiating UE, the COT responding UE may request shared COT information to the COT initiating UE.

According to the present disclosure, for example, it is proposed that a COT responding UE starts a timer if triggering or transmitting a message requesting shared COT information and monitors shared COT information transmitted by a COT initiating UE until the timer expires. For example, if a COT responding UE starts a timer by triggering or transmitting a message requesting shared COT information and does not receive shared COT information from a COT initiating UE until the timer expires, it is proposed to re-trigger transmission of a message requesting a shared COT or to retransmit a message requesting a shared COT and restart the timer when or just before the timer expires. The number of times a COT responding UE re-requests shared COT information may be allowed to be limited to a threshold (e.g., configured by a base station or pre-configured).

According to the present disclosure, for example, the following conditions are proposed as conditions (e.g., conditions) under which a COT initiating UE may transmit shared COT information to a COT responding UE (e.g., via SCI, MAC CE or PC5 RRC message). For example, if a COT initiating UE has a packet or TB or PSFCH or sidelink signal or sidelink channel or SL-SSB to transmit to a COT responding UE, the COT initiating UE may transmit shared COT information to the COT responding UE.

According to the present disclosure, for example, if a COT initiating UE transmits shared COT information to a COT responding UE, if the shared COT is transmitted upon receiving a request from the COT responding UE, it is proposed that the COT initiating UE also transmits a flag indicating that the shared COT is transmitted upon receiving the request from the COT responding UE.

According to the present disclosure, for example, it is proposed that a COT initiating UE voluntarily transmits shared COT information to a COT responding UE according to specific conditions of the COT responding UE, rather than transmitting shared COT information by receiving a message requesting shared COT information from the COT responding UE.

According to the present disclosure, for example, If a COT responding UE receives both shared COT information that the COT responding UE directly requested and received from a COT initiating UE, (this may be verified by checking a flag of the shared COT information received from the COT initiating UE) and shared COT information that the COT initiating UE voluntarily transmitted, the COT responding UE may preferentially use the shared COT information that the COT responding UE directly requested and received. If a UE receiving COT sharing does not receive shared COT information that the UE receiving COT directly requested (e.g., due to missing), but receives shared COT information related to a shared COT that a COT initiating UE voluntarily initiated and transmitted (condition based shared COT transmission), an operation is proposed in which a COT initiating UE may use, if the received shared COT (shared COT received for condition-based shared COT transmission) has a gap equal to or less than a specific level (equal to or less than a threshold) with the shared COT information the UE receiving COT requested, the shared COT voluntarily initiated and transmitted.

An RB set in a sidelink resource pool used by a transmitting UE for transmitting sidelink data may be configured or set as an RB set without a guard band between RB sets.

According to the present disclosure, an LBT failure indication and LBT failure counting operation of a transmitting UE are proposed as follows if RB sets in a sidelink resource pool used by a transmitting UE for transmitting sidelink data do not have a guard band.

If a guard band is not configured between RB sets, the transmitting UE may perform sensing for an entire RB set even if a transmitting UE performs LBT failure indication (e.g., if a physical layer detects an LBT failure, the physical layer may report an LBT failure indication to a MAC layer) or LBT failure counting (e.g., if the MAC layer receives an LBT failure indication from the physical layer, the MAC layer increments LBT count) in units of specific RB sets. If a guard band is configured between RB sets, a UE may perform sensing and LBT failure indication or LBT failure counting in units of RB sets. According to the present disclosure, the following UE operations are proposed according to whether a guard band is configured between RB sets or not.

If RB sets in a sidelink resource pool used by a transmitting UE for transmitting sidelink data have guard bands, a physical layer of the transmitting UE may perform an operation to detect SL LBT failure in the RB sets supporting the corresponding guard bands. A physical layer of a transmitting UE may detect sidelink LBT failure in units of RB sets and transmit an LBT failure indication to a MAC layer.

If RB sets in a sidelink resource pool used by a transmitting UE for transmitting sidelink data do not have (or have) a guard band, a physical layer of the transmitting UE may detect an SL LBT failure in units of RB sets and report an SL LBT failure indication to a MAC layer not in units of RB sets, but in units (granularity) of a sidelink resource pool or in units (granularity) of a carrier-specific (e.g., a set of multiple RB sets or a set of multiple sidelink resource pools).

According to the present disclosure, for example, even if a UE is configured (e.g., a base station or a peer UE may configure) or indicated (e.g., the peer UE or the base station may indicate) to perform LBT failure indication or LBT failure counting in units (granularity) of RB sets, the UE may perform an LBT operation by changing the granularity for performing LBT failure indication or LBT failure counting according to characteristics of a sidelink resource pool selected by the transmitting UE (e.g., whether the sidelink resource pool selected by the transmitting UE for data transmission has a guard band configured between RB sets or not). For example, if a guard band between RB sets is configured in a sidelink resource pool selected for data transmission, the transmitting UE may perform LBT failure indication or LBT failure counting in units (granularity) of RB sets, and if a guard band between RB sets is not configured in a sidelink resource pool selected for transmission, the UE may perform LBT failure indication or LBT failure counting in units (granularity) of resource pool.

If an SL LBT failure is detected while performing an LBT operation to occupy a channel of an unlicensed band, a MAC layer of the transmitting UE may receive an indication of an event of the SL LBT failure from Physical layer.

In SL-U, a UE may perform an SL LBT failure event-based operation as follows.

A UE may be configured following parameters for SL LBT failure management by a base station and may perform an operation for recovery of an SL LBT failure or an operation for declaration of an SL LBT failure.
- SL LBT Failure Instance Maximum Count (sl-lbt-FailureInstanceMaxCount): If a UE detects an SL LBT failure, the UE may increment SL_LBT_COUNTER by 1 and if the UE detects the number of SL LBT failures as many as sl-lbt-FailureInstanceMaxCount until sl-lbt-FailureDetectionTimer expires, the UE may declare an SL LBT failure.
- sl-lbt-FailureDetectionTimer: A timer that is started if a SL LBT failure is detected, and UE may perform a process of recovery of an SL LBT failure while the timer is running.

For example, if a MAC layer of a transmitting UE receives an event of an SL LBT failure (e.g., a UE detects an SL LBT failure), the MAC layer of the transmitting UE may start sl-lbt-FailureDetectionTimer and may simultaneously increment SL_LBT_COUNTER by 1. For example, a process of recovery of SL LBT is performed while sl-lbt-FailureDetectionTimer is running. For example, if a UE detects SL LBT failure again while sl-lbt-FailureDetectionTimer timer is running, the UE increments SL_LBT_COUNTER by 1. For example, if SL_LBT _COUNTER incremented due to SL LBT detection does not reach threshold number (sl-lbt-FailureInstanceMaxCount) before sl-lbt-FailureDetectionTimer expires, a UE may consider SL LBT failure to have been recovered and may continue to perform normal sidelink communication by using a sidelink grant in use.

For example, if SL_LBT_COUNTER incremented due to SL LBT failure detection reaches a threshold number (sl-lbt-FailureInstanceMaxCount) before sl-lbt-FailureDetectionTimer expires, a UE may consider SL LBT failure not to have been recovered and declare consistent SL LBT failure. A transmitting UE may declare SL LBT failure if the SL LBT failure is not recovered until sl-lbt-FailureDetectionTimer expires.

If a transmitting UE declares SL LBT failure, the transmitting UE may perform the following operations:
- A UE may release/discard/ignore a sidelink grant per specific unicast link (a pair of Source Layer-2 ID and Destination Layer-2 ID or PC5 Link Identifier) where SL LBT failure occurred. For example, if a transmitting UE has multiple Unicast links established with a destination UE with which a unicast have been established, the transmitting UE may release/discard/ignore only a sidelink grant (mode 1 grant, mode 2 grant) allocated or created for a specific Unicast link for which SL LBT failure has been declared and report an ACK to a base station through PUCCH so that the base station does not allocate any more Mode 1 sidelink grants. For example, a UE may only release a specific unicast link where SL LBT failure occurred. For example, if an LBT failure is declared for a specific unicast link (a pair of Source Layer-2 ID and Destination Layer-2 ID or PC5 Link Identifier), an AS layer may report an identifier (PC5 Link Identifier) of the unicast link that declared the LBT failure and an SL LBT failure indication to an upper layer (e.g., V2X layer). If a V2X layer receives an SL LBT failure indication and PC5 Link Identifier from an AS layer, the V2X layer may release an SL Unicast link for the corresponding PC5 Link Identifier.

According to a present disclosure, a UE may perform LBT a failure detection operation per sidelink resource pool or per Sidelink RB set. For example, a physical layer of a UE detects sidelink LBT failure per sidelink resource pool or per sidelink RB set and reports an SL LBT failure indication to a MAC layer. If a MAC Layer receives an SL LBT failure indication from a Physical layer, the MAC Layer may increment SL_LBT_COUNTER by 1 per sidelink resource pool or per sidelink RB set. If an SL LBT failure per sidelink resource pool or per sidelink RB set reaches a threshold, a UE declares Consistent SL LBT failure for the corresponding sidelink resource pool or sidelink RB set and switches to another sidelink resource pool or sidelink RB set to continue performing the SL LBT operation for SL TB transmission. If a UE declares consistent SL LBT failure for all sidelink resource pools or all sidelink RB sets, the UE declares SL RLF for the corresponding sidelink session (SL RLF is declared only for unicast) and releases the corresponding sidelink session (unicast/broadcast/groupcast).

In a sidelink unlicensed band, a UE may perform Multiple Consecutive Slot Transmission (MCSt)-based unlicensed band operation.

By performing MCSt-based sidelink transmission, sidelink data can be transmitted without performing LBT during the gap between sidelink transmissions, which has the effect of reducing the overhead of a transmission operation (e.g., performing LBT) in a sidelink unlicensed band.

MCSt: a Sidelink Slot less than or equal to a specific GAP are allocated as a transmission resource for continuous sidelink transmission, and a UE may transmit a same sidelink TB or multiple sidelink TBs using Multiple Consecutive Slots (e.g., a set of sidelink transmissions using consecutive sidelink slots with a gap of 16 usec or less between sidelink slots, and consecutive transmission is possible without LBT during a gap between sidelink transmissions using consecutive slots). A UE may perform LBT in a first slot and transmit sidelink TBs without performing LBT for sidelink TBs transmitted through subsequent consecutive slots (consecutive slots less than or equal to a specific GAP). By performing MCSt-based sidelink transmission, a UE can transmit sidelink data without performing LBT during the gap between consecutive slots for sidelink transmission, which has the effect of reducing the overhead of a transmission operation (e.g., performing LBT) in a sidelink unlicensed band.

Multiple consecutive slots may refer to a set of sidelink transmissions using consecutive sidelink slots with a gap of 16 usec or less between transmissions. A UE may be capable of transmitting without LBT during a gap between sidelink transmissions using consecutive sidelink slots. transmissions may be consecutive transmissions. A set of sidelink transmissions may refer to SL/SL transmissions, UL/SL transmissions, or a set of UL and/or SL transmissions.

By performing MCSt-based sidelink transmission, a UE can transmit sidelink data without performing LBT during the gap between consecutive slots for sidelink transmission, which has the effect of reducing the overhead of a transmission operation (e.g., performing LBT) in a sidelink unlicensed band.

According to the present disclosure, for example, a consistent sidelink LBT failure operation of a UE during MCSt operation is proposed.

It is proposed that a UE increments the LBT count by 1 per sidelink LBT failure that occurred per slot of MCSt if detecting a sidelink LBT failure for MCSt-based SL TB transmission. For example, a MAC layer of a UE may receive a report of an SL LBT failure indication from a physical layer per slot in which an SL LBT failure occurs for MCSt-based SL TB transmission. For example, a physical layer may report an SL LBT failure indication to a MAC layer per slot in which the physical layer performed a sidelink TB transmission.

According to the present disclosure, for example, it is proposed that a UE performs counting once per MCSt, rather than incrementing the count by 1 per sidelink LBT failure that occurred in the slot of all MCSts if the UE detects a sidelink LBT failure for a MCSt-based SL TB transmission. For example, a MAC layer of a UE may only receive one SL LBT failure indication report from a physical layer for an MCSt-based SL TB transmission. For example, a physical layer does not report an SL LBT failure indication to a MAC layer for every slot in which the physical layer performed a sidelink TB transmission, but instead reports only one SL LBT failure indication to the MAC layer. For example, according to an embodiment, limited to the case where a transmitting UE (e.g., a COT initiating UE) initiates a COT by itself, obtains a COT, and then performs type 2 LBT through the obtained COT, and the UE transmits SL data or SL TB to MCSt, if the transmitting UE detects a sidelink LBT failure for SL TB transmission, instead of incrementing LBT counter by 1 per sidelink LBT failure that occurred in the slot of all MCSts, the transmitting UE may increment LBT failure counter by one per MCSt. For example, limited to the case where a transmitting UE (e.g., a COT responding UE) performs type 2 LBT in a shared COT using the shared COT received from a peer UE instead of the case where the transmitting UE initiates a COT by itself, obtains a COT, and then performs type 2 LBT through the obtained COT, if the transmitting UE detects a sidelink LBT failure for SL TB transmission, instead of incrementing LBT counter by 1 per sidelink LBT failure that occurred in the slot of all MCSts, the transmitting UE may increment LBT failure counter by one per MCSt. For example, according to an embodiment, a transmitting UE transmits SL data or SL TB with MCSt only if transmitting SL TB with wideband (for example, performing LBT per 20 MHz channel and aggregating multiple 20 MHz channels if multiple 20 MHz channels are idle to transmit SL data with a wideband (for example, 80 MHz) channel), if the transmitting UE detects a sidelink LBT failure for SL TB transmission, instead of incrementing LBT counter by 1 per sidelink LBT failure that occurred in the slot of all MCSts, the transmitting UE may increment LBT failure counter by one per MCSt. According to an embodiment, for example, if a transmitting UE switches from wideband (e.g., 80 MHz) transmission to narrowband (20 MHz) transmission and transmits SL data or SL TB to MCSt, if the transmitting UE detects a sidelink LBT failure for SL TB transmission, the transmitting UE increments LBT counter by 1 per sidelink LBT failure that occurred in the slots of all MCSts.

According to an embodiment, for example, if a UE performs MCSt-based SL TB transmission through four consecutive sidelink slots, if a physical layer detects SL LBT failure for three slots and does not detect SL LBT failure for only one slot, the physical layer may not report an SL LBT failure indication to a MAC layer. In MCSt-based SL TB transmission, if SL LBT succeeds at least in one of multiple slots, a physical layer may not transmit an SL LBT failure indication to a MAC layer.

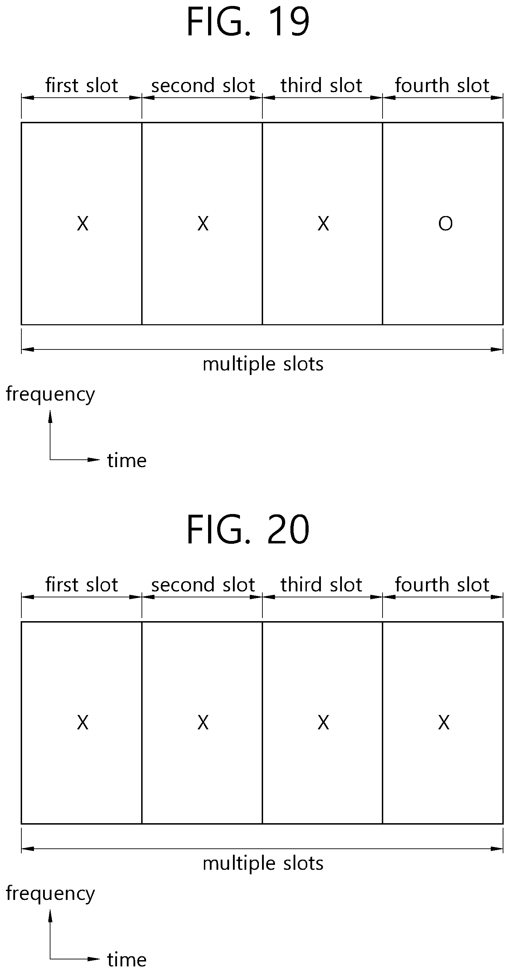

FIG. 19 shows an example of not transmitting an SL LBT failure indication in multiple slots, based on an embodiment of the present disclosure. The embodiment of FIG. 19 may be combined with various embodiments of the present disclosure.

Referring to FIG. 19, multiple slots may refer to a set of sidelink transmissions using consecutive sidelink slots with a gap of 16 usec or less between transmissions. A UE may be capable of transmitting without LBT during a gap between sidelink transmissions using consecutive sidelink slots. transmissions may be consecutive transmissions. A set of sidelink transmissions may refer to SL/SL transmissions, UL/SL transmissions, or a set of UL and/or SL transmissions. For example, if LBT for transmission succeeds for one slot among multiple slots, SL may be transmitted without performing LBT for other slots among multiple slots.

As shown in FIG. 19, if a UE performs MCSt-based SL TB transmission through four consecutive sidelink slots, a physical layer may detect SL LBT failure for three slots and may not detect SL LBT failure for only one slot. For example, SL LBT failure may be detected for the first slot to the third slot, and SL LBT failure may not be detected for the fourth slot. Based on that SL LBT failure has not been detected for the fourth slot, a physical layer may not report an SL LBT failure indication to a MAC layer. For example, in MCSt-based SL TB transmission, if SL LBT succeeds at least in one of multiple slots, a physical layer may not transmit an SL LBT failure indication to the MAC layer.

In Fig. 19, the case where four slots are multiple slots is shown, but it is not limited to this. For example, the case where the number of multiple slots is not four is not excluded. In Fig. 19, the case where one slot out of four slots succeeds in SL LBT is shown, but it is not limited to this.

FIG. 20 shows an example of transmitting an SL LBT failure indication in multiple slots, based on an embodiment of the present disclosure. The embodiment of FIG. 20 may be combined with various embodiments of the present disclosure.

Referring to FIG. 20, multiple slots may refer to a set of sidelink transmissions using consecutive sidelink slots with a gap of 16 usec or less between transmissions. A UE may be capable of transmitting without LBT during a gap between sidelink transmissions using consecutive sidelink slots. transmissions may be consecutive transmissions. A set of sidelink transmissions may refer to SL/SL transmissions, UL/SL transmissions, or a set of UL and/or SL transmissions. For example, if LBT for transmission succeeds for one slot among multiple slots, SL may be transmitted without performing LBT for other slots among multiple slots.

As shown in FIG. 20, if a UE performs MCSt-based SL TB transmission through four consecutive sidelink slots, a physical layer may detect SL LBT failures for all four slots. For example, an SL LBT failure may be detected for the first slot to the fourth slot. A physical layer may report an SL LBT failure indication to the MAC layer. Based on that SL LBT failure has been detected for the first slot to the fourth slot, a physical layer may report an SL LBT failure indication to a MAC layer. For example, based on that SL LBT failure has been detected for the first slot to the fourth slot, a physical layer may report an SL LBT failure indication to a MAC layer only once. For example, in MCSt-based SL TB transmission, if SL LBT fails in all of a plurality of slots, a physical layer may transmit the SL LBT failure indication to a MAC layer only once.

In Fig. 20, the case where four slots are multiple slots is shown, but it is not limited to this. For example, the case where the number of multiple slots is not four is not excluded.

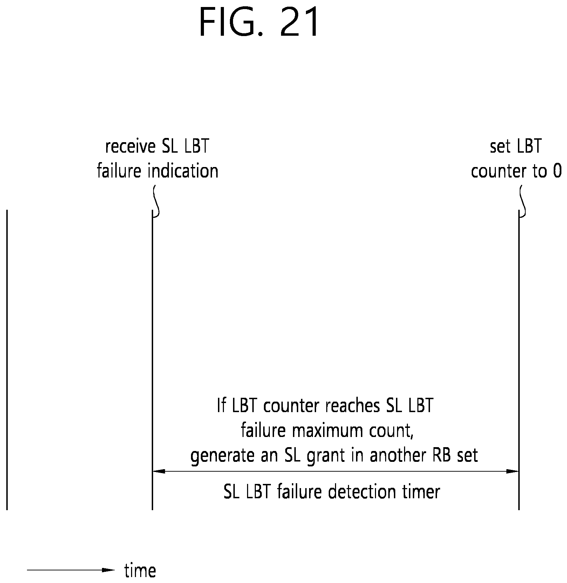

FIG. 21 shows an SL LBT failure detection and recovery procedure, based on an embodiment of the present disclosure. The embodiment of FIG. 21 may be combined with various embodiments of the present disclosure.

Referring to FIG. 21, a MAC entity of a UE may receive information related to SL LBT failure. A MAC entity of a UE may receive information related to SL LBT failure from a lower layer (e.g., physical layer). A lower layer of a UE may perform an LBT procedure. An LBT procedure may be an SL LBT procedure. A lower layer of a UE may perform an LBT procedure, and if a channel is identified as being occupied, a transmission may not be performed by the lower layer of the UE. When a lower layer of a UE performs an SL LBT procedure before a transmission and the transmission is not performed, an SL LBT failure indication may be sent to a MAC entity of the UE from the lower layer of the UE. If information related to an SL LBT failure has been received from a lower layer of a UE, a MAC entity of the UE may start an SL LBT failure detection timer. If information related to an SL LBT failure has been received from a lower layer of a UE, a MAC entity of the UE may increment LBT counter. LBT counter is a counter related to information related to SL LBT failure, which may be initially set to 0.

If LBT counter reaches SL LBT failure maximum count, consistent SL LBT failure may be triggered. That LBT failure counter reaches SL LBT failure maximum count may refer to that the LBT failure counter is larger than or equal to the SL LBT failure maximum count. For example, SL LBT failure may be triggered for an RB set. For example, SL LBT failure may be triggered for a resource pool. For example, based on triggered SL LBT failure, information related to consistent SL LBT failure may be transmitted to a base station. For example, based on triggered SL LBT failure, an SL grant may be generated in an RB set different from an RB set where the SL LBT failure occurred. For example, based on an SL grant generated from another RB set, SL transmission that could not be completed due to an SL LBT failure may be continued. For example, switching of an RB set may be controlled by a MAC entity based on its own detection of consistent LBT failure.

If SL LBT failure detection timer expires, LBT counter may be set to 0. If information related to an SL LBT failure has been received from a lower layer of a UE, a MAC entity of the UE may restart SL LBT failure detection timer. If information related to an SL LBT failure has been received from a lower layer of a UE, a MAC entity of the UE may increment LBT counter.

According to an embodiment, if a UE performs MCSt-based SL TB transmission and transmits multiple sidelink TBs in MCSt, (e.g., transmits multiple sidelink TBs in multiple consecutive slots of MCSt), a physical layer may report only one indication of SL LBT failure per sidelink TB to a MAC layer. For example, if a UE performs MCSt-based SL TB transmission over four consecutive sidelink slots, the UE may transmit sidelink TB 1 over the first two sidelink slots (e.g., sidelink slot 1, sidelink slot 2) and transmit sidelink TB2 over the remaining two sidelink slots (e.g., sidelink slot 3, sidelink slot 4). If a UE detects SL LBT failure in sidelink slot 1 used to transmit sidelink TB 1 and also detects SL LBT failure in sidelink slot 2, a physical layer may report only one SL LBT failure indication to a MAC layer. For example, if the UE succeeds in SL LBT in sidelink slot 3 used to transmit sidelink TB 2 and detects SL LBT failure in sidelink slot 4, a physical layer may report only one SL LBT failure indication to a MAC layer. A MAC layer may count the number of SL LBT occurrences as many as the number of SL LBT failure indications received from a physical layer.

According to an embodiment, if a UE performs MCSt-based SL TB transmission and transmits multiple sidelink TBs in MCSt, (e.g., transmits multiple sidelink TBs in multiple consecutive slots of MCSt), a physical layer may report to a MAC layer any SL LBT failure indication that occurs during transmission in a sidelink slot used for the sidelink TB transmission. For example, if a UE performs MCSt-based SL TB transmission over four consecutive sidelink slots, the UE may transmit sidelink TB 1 over the first two sidelink slots (e.g., sidelink slot 1, sidelink slot 2) and transmit sidelink TB2 over the remaining two sidelink slots (e.g., sidelink slot 3, sidelink slot 4). If a UE detects SL LBT failure in sidelink slot 1 used to transmit sidelink TB 1 and also detects SL LBT failure in sidelink slot 2, a physical layer may report all SL LBT failure indications (e.g., two SL LBT failure indications) to a MAC layer. For example, if the UE succeeds in SL LBT in sidelink slot 3 used to transmit sidelink TB 2 and detects SL LBT failure in sidelink slot 4, a physical layer may report only one SL LBT failure indication to a MAC layer. If a physical layer reports an SL LBT failure indication to a MAC layer, the physical layer may also transfer information for SL TB where SL LBT failure occurred (e.g., a sidelink slot index used to transmit SL TB, e.g., sidelink slot 1, sidelink slot 2). A MAC layer may increment SL LBT count by at most one per sidelink TB, even if the MAC layer recognizes that multiple SL LBT failures have occurred per SL TB based on SL LBT failure indication received from a Physical layer and information for SL TB where SL LBT failure occurred. For example, if an SL LBT failure is detected in sidelink slot 1 used by a UE to transmit sidelink TB 1 and also in sidelink slot 2, a physical layer may report both SL LBT failure indications (i.e., two SL LBT failure indications) to a MAC layer and may also transfer information for SL TB where SL LBT failure occurred (e.g., a sidelink slot index used to transmit SL TB, e.g., sidelink slot 1, sidelink slot 2). A MAC layer of a UE may only increment SL LBT count by 1 even if the MAC layer of the UE receives two SL LBT failure indications from a physical layer on sidelink TB 1.

When transmitting MCSt-based SL TB transmission, if the physical layer of the UE detects an SL LBT failure, it may report an SL LBT failure to the MAC layer. For example, if the physical layer of the UE reports an SL LBT failure to the MAC layer, it may transfer the following assistance information together.
- RB set index: RB set index where SL LBT failure occurred
- Resource pool index: Resource pool index where SL LBT failure occurred
- Carrier index: Carrier index where SL LBT failure occurred
- SL BWP: SL BWP index where SL LBT failure occurred
- Recommended RB set index or recommended resource pool index: RB set index to which a MAC layer should switch or sidelink resource pool index to which the MAC layer should switch
- The number of SL LBT failures per MCSt
- Sidelink slot index where SL LBT failures occurred per MCSt
- Sidelink slot index information where SL LBT failures occurred per sidelink TB in MCSt
- Consistent SL LBT failure or Channel access type used to declare SL LBT failure (e.g., Type 1 SL LBT or Type 2 SL LBT)
- PC5 link identifier: PC5 unicast link information where SL LBT failure occurred
- A pair of a source layer-1 ID and a destination layer-1 ID or a groupcast/broadcast destination layer-1 ID: information related to source/destination where SL LBT failure occurred
- A pair of a source layer-2 ID and a destination layer-2 ID or a groupcast/broadcast destination layer-2 ID: information related to a source/destination where the SL LBT failure occurred
- A groupcast/broadcast destination layer-1 ID or a groupcast/broadcast destination layer-2 ID: information related to a groupcast/broadcast destination ID where the SL LBT failure occurred
- Information related to a time when the SL LBT failure occurred

Transmissions in one SL TB transmitted by a transmitting UE in MCSt or COT or shared COT can maintain the same frequency amount. On the other hand, transmissions in different SL TBs transmitted by a transmitting UE in MCSt or COT or shared COT can have different frequency amounts applied.

By counting LBT failure as one LBT failure even when there is an LBT failure in each slot belonging to MCSt, the number of LBT counts can be reduced, which can reduce overhead. By reducing the number of LBT counts, resources can be utilized more efficiently. By counting LBT failure as one LBT failure even when there is an LBT failure in each slot belonging to MCSt, the number of LBT counts can be reduced, which can reduce delay by preventing triggering of unnecessary continuous SL LBT failures and help optimize the performance of the entire network. By reducing energy consumption due to unnecessary LBT failure counting, battery life can be extended.

In various embodiments of the present disclosure, "channel" may be applied by replacing "carrier" or "resource block set of a specific carrier" or "band".

For example, whether or not (some of) the proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not (some of) the proposed schemes/rules of the present disclosure are applied and/or related parameters (e.g., thresholds) may be specifically (or differently or independently) configured based on whether LBT succeeds/fails, per LBT-related energy detection levels, per sidelink channels (PSCCH/PSSCH, PSFCH, SL-SSB), based on whether MCSt (Multi-Consecutive Slot Transmission) is applied, based on whether multi-PSFCH resources (multi-PSFCH occasions) are applied, based on resource order/location consist of MCSt, based on whether multiple starting points are configured within one slot, based on whether the 1st starting point (or 2nd starting point) is applied, etc.

For example, whether or not (some of) the proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2). For example, whether or not the (some) proposed method/rule of the present disclosure is applied and/or related parameter(s) (e.g., threshold value(s)) may be configured (differently or independently) for each Tx profile (e.g., a Tx profile indicating that a service supports sidelink DRX operation or a Tx profile indicating that a service does not need to support sidelink DRX operation).

For example, whether or not the proposed rule of the present disclosure is applied and/or related parameter configuration value(s) may be configured specifically (or differently or independently) depending on whether a PUCCH configuration is supported (e.g., in case that a PUCCH resource is configured or in case that a PUCCH resource is not configured). For example, whether or not the proposed rule of the present disclosure is applied and/or related parameter configuration value(s) may be configured (differently or independently) for each resource pool (e.g., a resource pool with a PSFCH or a resource pool without a PSFCH). For example, whether or not the proposed rule of the present disclosure is applied and/or related parameter configuration value(s) may be configured (differently or independently) for each sidelink logical channel/logical channel group (or Uu logical channel or Uu logical channel group).

For example, whether or not the proposed rule of the present disclosure is applied and/or related parameter configuration value(s) may be configured (differently or independently) for each resource pool. For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each PFI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or depending on whether or not pre-emption-based resource reselection is performed. For example, whether or not the proposed rule of the present disclosure is applied and/or related parameter configuration value(s) may be configured specifically (or differently or independently) for re-evaluation or depending on whether or not re-evaluation-based resource reselection is performed. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) depending on whether or not SL DRX is performed. For example, whether or not the proposed rule of the present disclosure is applied and/or related parameter configuration value(s) may be configured specifically (or differently or independently) depending on whether or not SL DRX is supported. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation. For example, whether or not the proposed rule of the present disclosure is applied and/or related parameter configuration value(s) may be configured specifically (or differently or independently) for each Tx profile (e.g., a Tx profile indicating that a service supports sidelink DRX operation or a Tx profile indicating that a service does not need to support sidelink DRX operation).

The proposal and whether or not the proposal rule of the present disclosure is applied (and/or related parameter configuration value(s)) may also be applied to a mmWave SL operation.

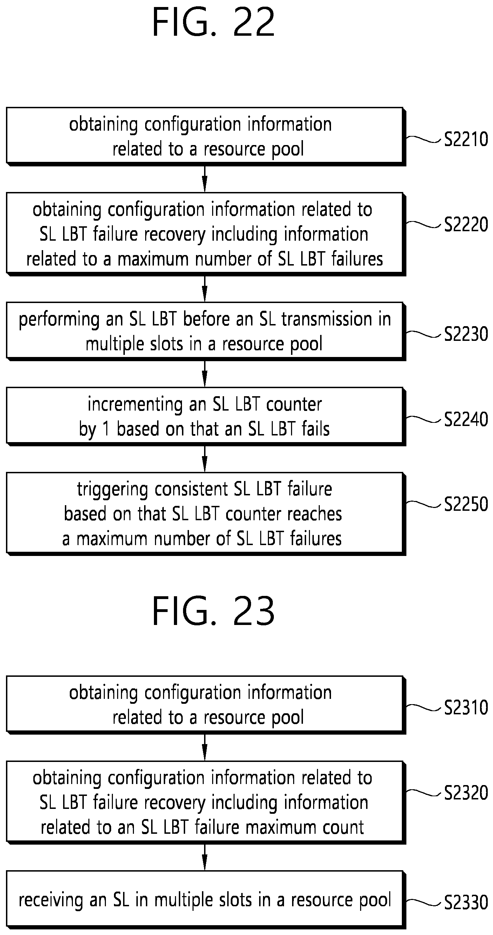

FIG. 22 shows a method for performing wireless communication by a first device, based on an embodiment of the present disclosure. The embodiment of FIG. 22 may be combined with various embodiments of the present disclosure.

Referring to FIG. 22, in step S2210, the first device may obtain configuration information related to a resource pool. In step S2220, the first device may obtain configuration information related to sidelink (SL) listen before talk (LBT) failure recovery including information related to a maximum number of SL LBT failures. In step S2230, the first device may perform an SL LBT before an SL transmission in multiple slots in the resource pool. In step S2240, the first device may increment an SL LBT counter by 1 based on that the SL LBT fails. In step S2250, the first device may trigger consistent SL LBT failure based on that the SL LBT counter reaches the maximum number of SL LBT failures.

For example, the failure of the SL LBT may be based on that the SL LBT fails in all of the multiple slots.

For example, based on that the SL LBT succeeds in one or more of the multiple slots, the SL LBT counter may not be incremented.

For example, the SL transmission may be a transmission of multiple SL transport blocks (TBs). For example, based on that the SL LBT fails in each of the multiple SL TBs, the SL LBT counter may be incremented by 1.

For example, the failure of the SL LBT may be based on that an SL LBT failure indication has been received, based on that the SL transmission is not performed, from a physical (PHY) layer of the first device.

For example, the SL LBT failure indication may include an index of a set of resource blocks (RBs) where the failure of the SL LBT occurred.

For example, the SL LBT failure indication may include an index of the resource pool where the failure of the SL LBT occurred.

For example, the SL LBT failure indication may include an index of the resource pool where the failure of the SL LBT occurred.

For example, the SL LBT failure indication may include an index of a resource pool to be switched.

For example, the configuration information related to the SL LBT failure recovery may include information related to an SL LBT failure detection timer. For example, based on the failure of the SL LBT, the SL LBT failure detection timer may be started.

For example, the LBT counter may be set to 0 based on that the SL LBT failure detection timer expires.

For example, based on the failure of the SL LBT, the SL LBT failure detection timer may be restarted.

For example, the SL LBT failure indication may be received by a medium access control (MAC) entity of the first device.

The proposed method may be applied to the device according to various embodiments of the present disclosure. First, the processor 102 of the first device 100 may obtain configuration information related to a resource pool. In addition, the processor 102 of the first device 100 may obtain configuration information related to sidelink (SL) listen before talk (LBT) failure recovery including information related to a maximum number of SL LBT failures. In addition, the processor 102 of the first device 100 may perform an SL LBT before an SL transmission in multiple slots in the resource pool. In addition, the processor 102 of the first device 100 may increment an SL LBT counter by 1 based on that the SL LBT fails. In addition, the processor 102 of the first device 100 may trigger consistent SL LBT failure based on that the SL LBT counter reaches the maximum number of SL LBT failures.

According to an embodiment of the present disclosure, a first device configured to perform wireless communication may be provided. For example, the first device may include: at least one transceiver; at least one processor; and at least one memory connected to the at least one processor and storing instructions. For example, the instructions, based on being executed by the at least one processor, cause the first device to perform operations comprising: obtaining configuration information related to a resource pool; obtaining configuration information related to sidelink (SL) listen before talk (LBT) failure recovery including information related to a maximum number of SL LBT failures; performing an SL LBT before an SL transmission in multiple slots in the resource pool; incrementing an SL LBT counter by 1 based on that the SL LBT fails; and triggering consistent SL LBT failure based on that the SL LBT counter reaches the maximum number of SL LBT failures.

According to an embodiment of the present disclosure, a processing device configured to control a first device may be provided. The processing may include: at least one processor; and at least one memory connected to the at least one processor and storing instructions. For example, the instructions, based on being executed by the at least one processor, cause the first device to perform operations comprising: obtaining configuration information related to a resource pool; obtaining configuration information related to sidelink (SL) listen before talk (LBT) failure recovery including information related to a maximum number of SL LBT failures; performing an SL LBT before an SL transmission in multiple slots in the resource pool; incrementing an SL LBT counter by 1 based on that the SL LBT fails; and triggering consistent SL LBT failure based on that the SL LBT counter reaches the maximum number of SL LBT failures.

According to an embodiment of the present disclosure, a non-transitory computer-readable storage medium storing instructions may be provided. For example, the instructions, based on being executed, cause a first device to perform operations comprising: obtaining configuration information related to a resource pool; obtaining configuration information related to sidelink (SL) listen before talk (LBT) failure recovery including information related to a maximum number of SL LBT failures; performing an SL LBT before an SL transmission in multiple slots in the resource pool; incrementing an SL LBT counter by 1 based on that the SL LBT fails; and triggering consistent SL LBT failure based on that the SL LBT counter reaches the maximum number of SL LBT failures.

FIG. 23 shows a method for performing wireless communication by a second device, based on an embodiment of the present disclosure. The embodiment of FIG. 23 may be combined with various embodiments of the present disclosure.

Referring to FIG. 23, in step S2310, the second device may obtain configuration information related to a resource pool. In step S2320, the second device may obtain configuration information related to sidelink (SL) listen before talk (LBT) failure recovery including information related to an SL LBT failure maximum count. In step S2330, the second device may receive an SL in multiple slots in the resource pool. For example, the reception of the SL may be performed before a consistent SL LBT failure related to the SL is triggered. For example, the trigger of the consistent SL LBT failure may be based on an SL LBT counter reaching the SL LBT failure maximum count. For example, the SL LBT counter may be incremented by 1, based on a failure of an SL LBT related to the SL in the multiple slots.

The proposed method may be applied to the device according to various embodiments of the present disclosure. First, the processor 202 of the second device 200 may obtain configuration information related to a resource pool. In addition, the processor 202 of the second device 200 may obtain configuration information related to sidelink (SL) listen before talk (LBT) failure recovery including information related to an SL LBT failure maximum count. In addition, the processor 202 of the second device 200 may control the transceiver 206 to receive an SL in multiple slots in the resource pool. For example, the reception of the SL may be performed before a consistent SL LBT failure related to the SL is triggered. For example, the trigger of the consistent SL LBT failure may be based on an SL LBT counter reaching the SL LBT failure maximum count. For example, the SL LBT counter may be incremented by 1, based on a failure of an SL LBT related to the SL in the multiple slots.

According to an embodiment of the present disclosure, a second device configured to perform wireless communication may be provided. For example, the second device may include: at least one transceiver; at least one processor; and at least one memory connected to the at least one processor and storing instructions. For example, the instructions, based on being executed by the at least one processor, cause the second device to perform operations comprising: obtaining configuration information related to a resource pool; obtaining configuration information related to sidelink (SL) listen before talk (LBT) failure recovery including information related to an SL LBT failure maximum count; and receiving an SL in multiple slots in the resource pool. For example, the reception of the SL may be performed before a consistent SL LBT failure related to the SL is triggered. For example, the trigger of the consistent SL LBT failure may be based on an SL LBT counter reaching the SL LBT failure maximum count. For example, the SL LBT counter may be incremented by 1, based on a failure of an SL LBT related to the SL in the multiple slots.

According to an embodiment of the present disclosure, a processing device configured to control a second device may be provided. The processing may include: at least one processor; and at least one memory connected to the at least one processor and storing instructions. For example, the instructions, based on being executed by the at least one processor, cause the second device to perform operations comprising: obtaining configuration information related to a resource pool; obtaining configuration information related to sidelink (SL) listen before talk (LBT) failure recovery including information related to an SL LBT failure maximum count; and receiving an SL in multiple slots in the resource pool. For example, the reception of the SL may be performed before a consistent SL LBT failure related to the SL is triggered. For example, the trigger of the consistent SL LBT failure may be based on an SL LBT counter reaching the SL LBT failure maximum count. For example, the SL LBT counter may be incremented by 1, based on a failure of an SL LBT related to the SL in the multiple slots.

According to an embodiment of the present disclosure, a non-transitory computer-readable storage medium storing instructions may be provided. For example, the instructions, based on being executed, cause a second device to perform operations comprising: obtaining configuration information related to a resource pool; obtaining configuration information related to sidelink (SL) listen before talk (LBT) failure recovery including information related to an SL LBT failure maximum count; and receiving an SL in multiple slots in the resource pool. For example, the reception of the SL may be performed before a consistent SL LBT failure related to the SL is triggered. For example, the trigger of the consistent SL LBT failure may be based on an SL LBT counter reaching the SL LBT failure maximum count. For example, the SL LBT counter may be incremented by 1, based on a failure of an SL LBT related to the SL in the multiple slots.

The various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

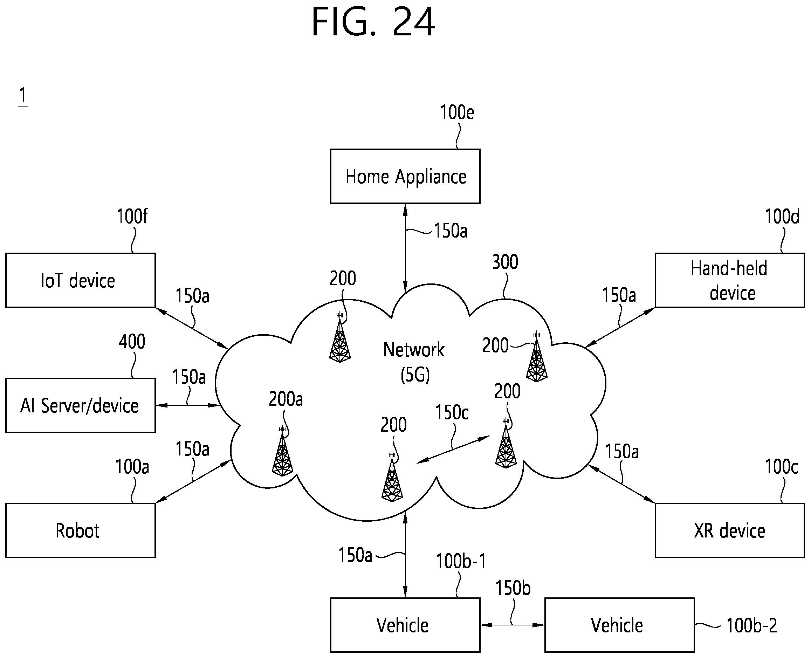

FIG. 24 shows a communication system 1, based on an embodiment of the present disclosure. The embodiment of FIG. 24 may be combined with various embodiments of the present disclosure.

Referring to FIG. 24, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to- Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

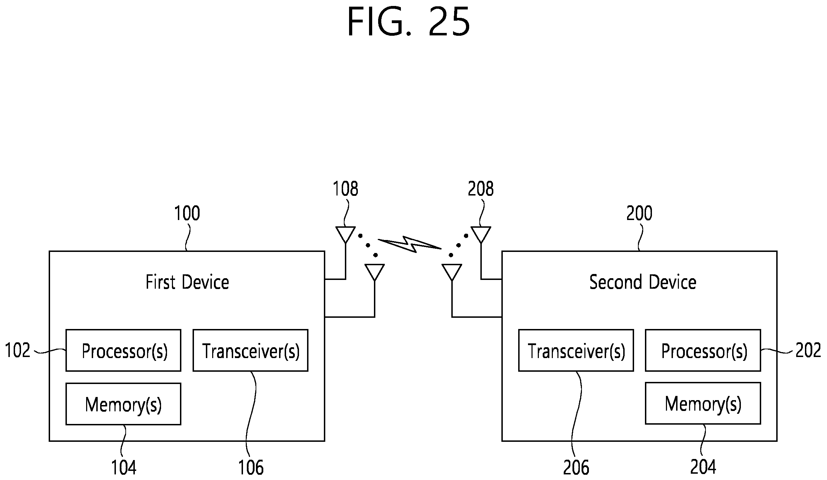

FIG. 25 shows wireless devices, based on an embodiment of the present disclosure. The embodiment of FIG. 25 may be combined with various embodiments of the present disclosure.

Referring to FIG. 25, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 24.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), RandomAccess Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

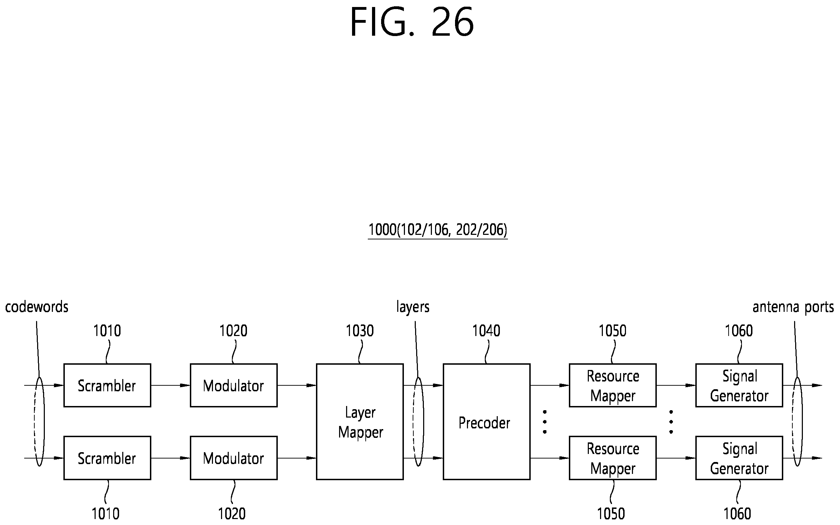

FIG. 26 shows a signal process circuit for a transmission signal, based on an embodiment of the present disclosure. The embodiment of FIG. 26 may be combined with various embodiments of the present disclosure.

Referring to FIG. 26, a signal processing circuit 1000 may include scramblers 1010, modulators 1020, a layer mapper 1030, a precoder 1040, resource mappers 1050, and signal generators 1060. An operation/function of FIG. 26 may be performed, without being limited to, the processors 102 and 202 and/or the transceivers 106 and 206 of FIG. 25. Hardware elements of FIG. 26 may be implemented by the processors 102 and 202 and/or the transceivers 106 and 206 of FIG. 25. For example, blocks 1010 to 1060 may be implemented by the processors 102 and 202 of FIG. 25. Alternatively, the blocks 1010 to 1050 may be implemented by the processors 102 and 202 of FIG. 25 and the block 1060 may be implemented by the transceivers 106 and 206 of FIG. 25.

Codewords may be converted into radio signals via the signal processing circuit 1000 of FIG. 26. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 26. For example, the wireless devices (e.g., 100 and 200 of FIG. 25) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

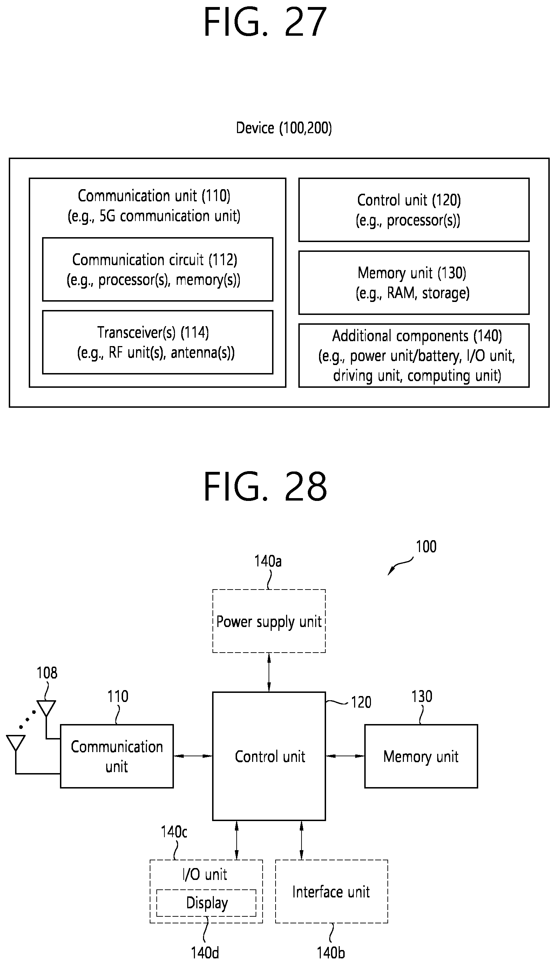

FIG. 27 shows another example of a wireless device, based on an embodiment of the present disclosure. The wireless device may be implemented in various forms according to a use-case/service (refer to FIG. 24). The embodiment of FIG. 27 may be combined with various embodiments of the present disclosure.

Referring to FIG. 27, wireless devices 100 and 200 may correspond to the wireless devices 100 and 200 of FIG. 25 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 25. For example, the transceiver(s) 114 may include the one or more transceivers 106 and 206 and/or the one or more antennas 108 and 208 of FIG. 25. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 24), the vehicles (100b-1 and 100b-2 of FIG. 24), the XR device (100c of FIG. 24), the hand-held device (100d of FIG. 24), the home appliance (100e of FIG. 24), the IoT device (100f of FIG. 24), a digital broadcast terminal, a hologram device, a public safety device, an MTC device, a medicine device, a fintech device (or a finance device), a security device, a climate/environment device, the AI server/device (400 of FIG. 24), the BSs (200 of FIG. 24), a network node, etc. The wireless device may be used in a mobile or fixed place according to a use-example/service.

In FIG. 27, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 27 will be described in detail with reference to the drawings.

FIG. 28 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 28 may be combined with various embodiments of the present disclosure.

Referring to FIG. 28, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 27, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

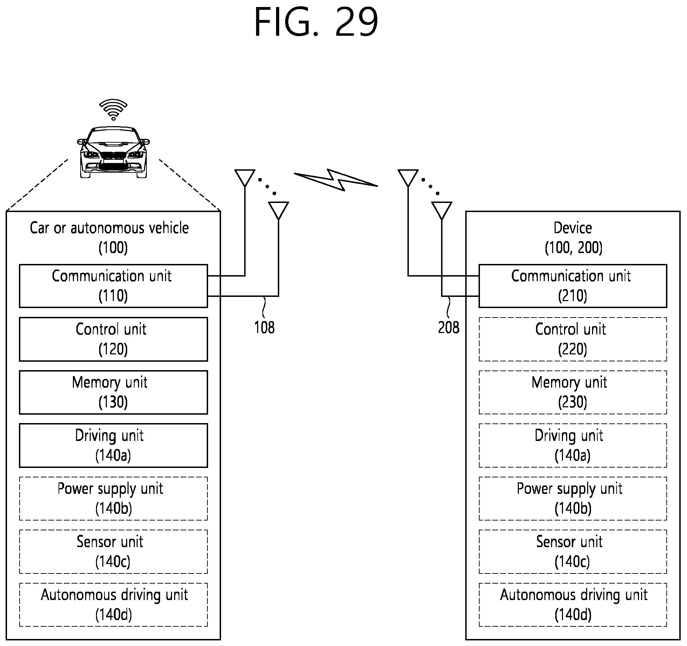

FIG. 29 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 29 may be combined with various embodiments of the present disclosure.

Referring to FIG. 29, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 27, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method performed by a first device in a wireless communication system, the method comprising:
obtaining configuration information related to a resource pool;
obtaining configuration information related to sidelink (SL) listen before talk (LBT) failure recovery including information related to a maximum number of SL LBT failures;
performing an SL LBT before an SL transmission in multiple slots in the resource pool;
incrementing an SL LBT counter by 1 based on that the SL LBT fails; and
triggering consistent SL LBT failure based on that the SL LBT counter reaches the maximum number of SL LBT failures.

2. The method of claim 1,
wherein the failure of the SL LBT is based on that the SL LBT fails in all of the multiple slots.

3. The method of claim 1,
wherein, based on that the SL LBT succeeds in one or more of the multiple slots, the SL LBT counter is not incremented.

4. The method of claim 1,
wherein the SL transmission is a transmission of multiple SL transport blocks (TBs), and
wherein, based on that the SL LBT fails in each of the multiple SL TBs, the SL LBT counter is incremented by 1.

5. The method of claim 1,
wherein the failure of the SL LBT is based on that an SL LBT failure indication has been received, based on that the SL transmission is not performed, from a physical (PHY) layer of the first device.

6. The method of claim 5,
wherein the SL LBT failure indication includes an index of a set of resource blocks (RBs) where the failure of the SL LBT occurred.

7. The method of claim 5,
wherein the SL LBT failure indication includes an index of the resource pool where the failure of the SL LBT occurred.

8. The method of claim 5,
wherein the SL LBT failure indication includes an index of the resource pool where the failure of the SL LBT occurred.

9. The method of claim 5,
wherein the SL LBT failure indication includes an index of a resource pool to be switched.

10. The method of claim 1,
wherein the configuration information related to the SL LBT failure recovery includes information related to an SL LBT failure detection timer, and
wherein, based on the failure of the SL LBT, the SL LBT failure detection timer is started.

11. The method of claim 10,
wherein the LBT counter is set to 0 based on that the SL LBT failure detection timer expires.

12. The method of claim 11,
wherein, based on the failure of the SL LBT, the SL LBT failure detection timer is restarted.

13. The method of claim 5,
wherein the SL LBT failure indication is received by a medium access control (MAC) entity of the first device.

14. A first device configured to perform wireless communication, the first device comprising:
at least one transceiver;
at least one processor; and
at least one memory connected to the at least one processor and storing instructions that, based on being executed by the at least one processor, cause the first device to perform operations comprising:
obtaining configuration information related to a resource pool;
obtaining configuration information related to sidelink (SL) listen before talk (LBT) failure recovery including information related to a maximum number of SL LBT failures;
performing an SL LBT before an SL transmission in multiple slots in the resource pool;
incrementing an SL LBT counter by 1 based on that the SL LBT fails; and
triggering consistent SL LBT failure based on that the SL LBT counter reaches the maximum number of SL LBT failures.

15. A processing device configured to control a first device, the processing device comprising:
at least one processor; and
at least one memory connected to the at least one processor and storing instructions that, based on being executed by the at least one processor, cause the first device to perform operations comprising:
obtaining configuration information related to a resource pool;
obtaining configuration information related to sidelink (SL) listen before talk (LBT) failure recovery including information related to a maximum number of SL LBT failures;
performing an SL LBT before an SL transmission in multiple slots in the resource pool;
incrementing an SL LBT counter by 1 based on that the SL LBT fails; and
triggering consistent SL LBT failure based on that the SL LBT counter reaches the maximum number of SL LBT failures.

16. A non-transitory computer-readable storage medium storing instructions that, based on being executed, cause a first device to perform operations comprising:
obtaining configuration information related to a resource pool;
obtaining configuration information related to sidelink (SL) listen before talk (LBT) failure recovery including information related to a maximum number of SL LBT failures;
performing an SL LBT before an SL transmission in multiple slots in the resource pool;
incrementing an SL LBT counter by 1 based on that the SL LBT fails; and
triggering consistent SL LBT failure based on that the SL LBT counter reaches the maximum number of SL LBT failures.

17. A method performed by a second device in a wireless communication system, the method comprising:
obtaining configuration information related to a resource pool;
obtaining configuration information related to sidelink (SL) listen before talk (LBT) failure recovery including information related to an SL LBT failure maximum count; and
receiving an SL in multiple slots in the resource pool,
wherein the reception of the SL is performed before a consistent SL LBT failure related to the SL is triggered,
wherein the trigger of the consistent SL LBT failure is based on an SL LBT counter reaching the SL LBT failure maximum count,
wherein the SL LBT counter is incremented by 1, based on a failure of an SL LBT related to the SL in the multiple slots.

18. A second device configured to perform wireless communication, the second device comprising:
at least one transceiver;
at least one processor; and
at least one memory connected to the at least one processor and storing instructions that, based on being executed by the at least one processor, cause the second device to perform operations comprising:
obtaining configuration information related to a resource pool;
obtaining configuration information related to sidelink (SL) listen before talk (LBT) failure recovery including information related to an SL LBT failure maximum count; and
receiving an SL in multiple slots in the resource pool,
wherein the reception of the SL is performed before a consistent SL LBT failure related to the SL is triggered,
wherein the trigger of the consistent SL LBT failure is based on an SL LBT counter reaching the SL LBT failure maximum count,
wherein the SL LBT counter is incremented by 1, based on a failure of an SL LBT related to the SL in the multiple slots.

19. A processing device configured to control a second device, the processing device comprising:
at least one processor; and
at least one memory connected to the at least one processor and storing instructions that, based on being executed by the at least one processor, cause the second device to perform operations comprising:
obtaining configuration information related to a resource pool;
obtaining configuration information related to sidelink (SL) listen before talk (LBT) failure recovery including information related to an SL LBT failure maximum count; and
receiving an SL in multiple slots in the resource pool,
wherein the reception of the SL is performed before a consistent SL LBT failure related to the SL is triggered,
wherein the trigger of the consistent SL LBT failure is based on an SL LBT counter reaching the SL LBT failure maximum count,
wherein the SL LBT counter is incremented by 1, based on a failure of an SL LBT related to the SL in the multiple slots.

20. A non-transitory computer-readable storage medium storing instructions that, based on being executed, cause a second device to perform operations comprising:
obtaining configuration information related to a resource pool;
obtaining configuration information related to sidelink (SL) listen before talk (LBT) failure recovery including information related to an SL LBT failure maximum count; and
receiving an SL in multiple slots in the resource pool,
wherein the reception of the SL is performed before a consistent SL LBT failure related to the SL is triggered,
wherein the trigger of the consistent SL LBT failure is based on an SL LBT counter reaching the SL LBT failure maximum count,
wherein the SL LBT counter is incremented by 1, based on a failure of an SL LBT related to the SL in the multiple slots.
